(19) Europäisches Patentamt / European Patent Office / Office européen des brevets

(11) **EP 2 174 290 B1**

(12) **FASCICULE DE BREVET EUROPEEN**

(45) Date de publication et mention de la délivrance du brevet:
**10.01.2018 Bulletin 2018/02**

(21) Numéro de dépôt: **08839566.0**

(22) Date de dépôt: **04.08.2008**

(51) Int Cl.:
**G06T 5/10** (2006.01)

(86) Numéro de dépôt international:
**PCT/FR2008/001164**

(87) Numéro de publication internationale:
**WO 2009/050355 (23.04.2009 Gazette 2009/17)**

(54) **PROCÉDÉ ET SYSTÈME ASSOCIÉ DE TRANSFORMÉE EN ONDELETTES AU FIL DE L'EAU POUR DES DONNÉES MULTIDIMENSIONNELLES MASSIVES**

ECHTZEIT-WAVELET-TRANSFORMATIONSVERFAHREN UND ENTSPRECHENDES SYSTEM FÜR MEHRDIMENSIONALE DATEN

REAL-TIME WAVELET TRANSFORM METHOD AND ASSOCIATED SYSTEM FOR MULTI-DIMENSIONAL DATA

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **03.08.2007 FR 0705696**

(43) Date de publication de la demande:
**14.04.2010 Bulletin 2010/15**

(73) Titulaire: **Centre National de la Recherche Scientifique (C.N.R.S.)**
**75794 Paris Cedex 16 (FR)**

(72) Inventeurs:
• **ANTONINI, Marc**
**06200 Nice (FR)**
• **MEFTAH, Anis**
**06200 Nice (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**WO-A-00/02157    US-B1- 6 757 343**
**US-B1- 6 978 048**

• **BAO Y ET AL: "DESIGN OF WAVELET-BASED IMAGE CODEC IN MEMORY-CONSTRAINED ENVIRONMENT" IEEE TRANSACTIONS ON CIRCUITS AND SYSTEMS FOR VIDEO TECHNOLOGY, IEEE SERVICE CENTER, PISCATAWAY, NJ, US, vol. 11, no. 5, 1 mai 2001 (2001-05-01), pages 642-650, XP001096943 ISSN: 1051-8215**
• **YANG C-H ET AL: "A BLOCK-BASED ARCHITECTURE FOR LIFTING SCHEME DISCRETE WAVELET TRANSFORM" IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E90A, no. 5, 1 mai 2007 (2007-05-01), pages 1062-1071, XP001542069 ISSN: 0916-8508**
• **WEEKS M ET AL: "On block architectures for discrete wavelet transform" SIGNALS, SYSTEMS & COMPUTERS, 1998. CONFERENCE RECORD OF THE THIRTY-SE COND ASILOMAR CONFERENCE ON PACIFIC GROVE, CA, USA 1-4 NOV. 1998, PISCATAWAY, NJ, USA,IEEE, US, vol. 2, 1 novembre 1998 (1998-11-01), pages 1022-1026, XP010324436 ISBN: 978-0-7803-5148-6**

- DENK T C ET AL: "Calculation of minimum number of registers in 2-D discrete wavelet transforms using lapped block processing" CIRCUITS AND SYSTEMS, 1994. ISCAS '94., 1994 IEEE INTERNATIONAL SYMPOS IUM ON LONDON, UK 30 MAY-2 JUNE 1994, NEW YORK, NY, USA,IEEE, US, vol. 3, 30 mai 1994 (1994-05-30), pages 77-80, XP010143141 ISBN: 978-0-7803-1915-8

## Description

L'invention concerne le domaine du traitement des images bi ou tri-dimensionnelles et plus particulièrement les transformées en ondelettes d'images multidimensionnelles.

Les nouveaux procédés d'acquisition d'images volumiques 3D peuvent générer des PetaOctets (1024x1024 GigaOctets) de données brutes numériques. Ces données volumiques peuvent être de différentes natures comme, par exemple, des cubes sismiques, des images médicales (coupes de scanners...)...Une double problématique se pose au regard de cette quantité de données : d'une part, le stockage est coûteux et d'autre part, le temps de traitement est excessif, par exemple pour manipuler, visualiser, transmettre ou compresser ces données avec ou sans pertes.

Cette double problématique existe également au regard de l'acquisition et exploitation d'images surfaciques 2D, par exemple des coupes de scanner haute définition.

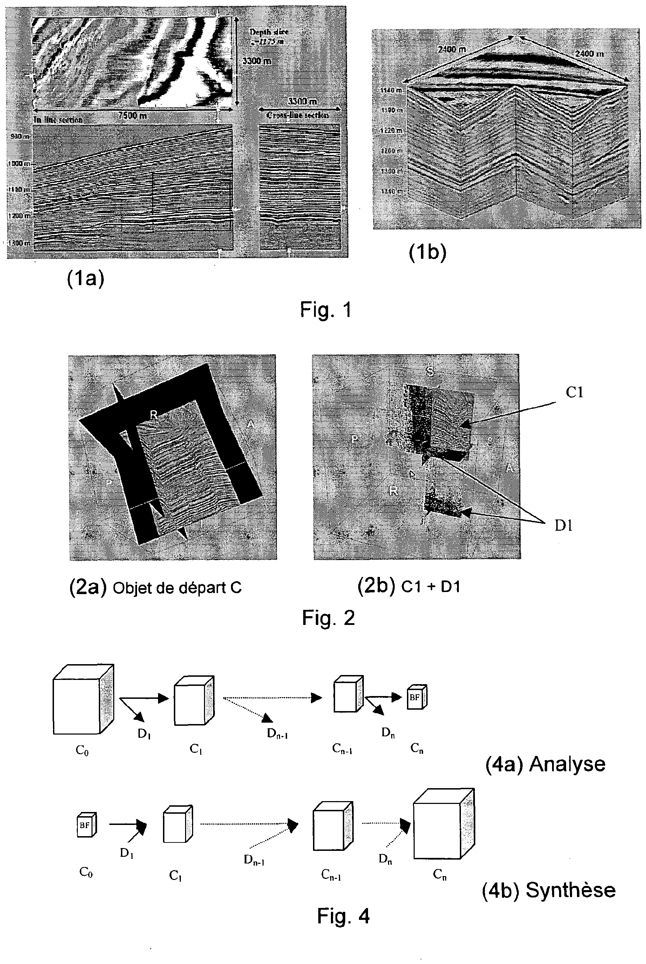

Le développement spectaculaire des systèmes d'acquisition de données sismiques 3D, comme par exemple le système développé à l'Ifremer (Geoscience 336 - 2004, pp. 579-585), a permis l'acquisition d'objets 3D de plus en plus détaillés. L'exemple le plus parlant est la campagne Hydratech faite au large de la Norvège, qui a permis l'acquisition d'objets 3D de très grandes résolutions. Par exemple, l'objet sismique 3D de la figure 1 a nécessité plusieurs jours de scannage et a produit un fichier qui pèse 150 gigas octets.

Le problème se pose lorsqu'il s'agit de manipuler, traiter et visualiser ces très grands volumes de données. En effet, la visualisation de l'objet ou sa compression nécessite son chargement en totalité dans la mémoire vive avant traitement ce qui n'est pas possible dans les solutions actuelles, car sa taille énorme requerrait plusieurs centaines de gigas octets de mémoire vive !!

Un premier but de l'invention est de proposer une solution permettant le traitement de ces objets multidimensionnels de très grandes tailles en utilisant un minimum de ressources (espace disque et mémoire vive).

Un autre but de l'invention est d'optimiser le temps de calcul de tels traitements au regard des ressources utilisées.

Il est connu d'utiliser l'analyse multirésolution pour la décomposition d'objets complexes afin de faciliter la navigation dans ses données, l'affichage, la transmission, la compression, ...

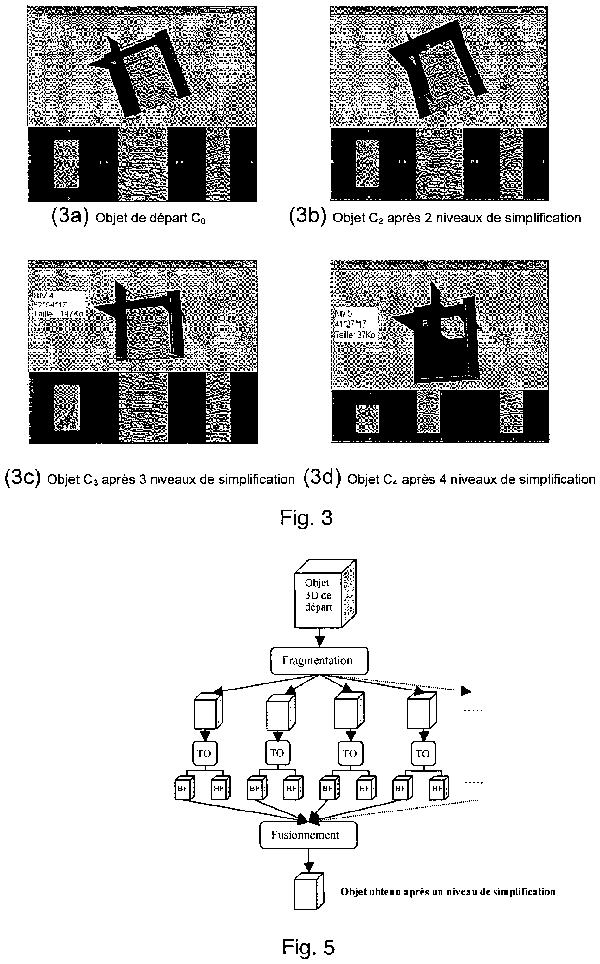

L'idée principale de l'analyse multirésolution est de décomposer (au moyen d'un filtrage) un objet 2D ou 3D de départ $C_0$ en deux ensembles : un objet $C_1$ plus grossier de plus basse résolution et de taille plus petite (voir figure 2) et un ensemble de détails hautes fréquences $D_1$. En répétant ce processus, on arrive à obtenir une représentation multirésolution de l'objet original (différentes versions $C_1$, $C_2$, $C_3$...) selon le niveau de détails souhaité (voir figures 3 et 4). A la fin de l'étape de l'analyse, on obtient un objet basse résolution $C_N$ et un ensemble de détails $D_1$, $D_2$ ... $D_N$. L'étape de synthèse subséquente à la représentation multirésolution consiste à reconstruire, au moyen d'un filtrage, l'objet en partant de sa version la plus grossière $C_N$ et en ajoutant à chaque fois l'ensemble de détails correspondant. A la fin de l'étape de synthèse, l'objet de départ $C_0$ est récupéré. La figure 4(a) illustre le principe de l'analyse multirésolution par décomposition et la figure 4(b) illustre le principe de la synthèse.

La transformée en ondelettes est largement utilisée dans le domaine du traitement du signal, notamment compression, et s'applique particulièrement bien à l'analyse multirésolution. Pour la mise en oeuvre logicielle ou matérielle de cette transformée, il est courant d'utiliser les transformées par bancs de filtres ou les transformées par schéma lifting.

L'art antérieur propose déjà de découper le volume 3D en plusieurs sous-blocs et les traiter indépendamment les uns des autres (Journal of VLSI Signal Processing, 41, pp. 209-223, 2005). Ce document décrit notamment un procédé de conversion de données brutes numériques multidimensionnelles correspondant à des points composant une image 2D ou 3D, le procédé comprenant une étape de dimensionnement d'une fenêtre de parcours de l'image, le parcours de ladite image et pour chaque sous-bloc parcouru le calcul de la transformée en ondelettes desdites données brutes du sous-bloc et enfin une étape de sauvegarde.

La technique exposée revient à considérer l'image 3D comme étant la concaténation de plusieurs petits cubes de taille mémoire admissible pour le traitement. Ensuite, le calcul de la transformée en ondelettes est effectué sur chaque sous-cube comme étant un objet à part entière. Une fois le calcul de tous les sous cubes effectué, une étape de fusion est effectuée pour obtenir le résultat final. Ce procédé est schématisé par la figure 5. L'objet 3D de départ passe par une étape de fragmentation pour générer les différents sous cubes. Sur chacun de ces sous-cubes, on applique la transformée en ondelettes. Enfin, on applique une étape de fusion.

Du fait de la fragmentation et du traitement sous-bloc par sous-bloc, la mémoire requise pour le traitement est réduite.

Néanmoins, cette solution présente plusieurs inconvénients.

D'une part, l'étape préliminaire de fragmentation réalise un découpage de l'image selon des sous-multiples des dimensions de l'image. Il en résulte le besoin de connaître a priori la taille totale de l'image afin d'effectuer cette étape. Une telle solution ne peut donc pas s'appliquer à une image en cours d'acquisition. Un autre but de l'invention est de permettre le traitement d'images de grandes dimensions au fur et à mesure de leur acquisition.

On note également que la détermination de la taille totale de l'image requiert soit le chargement intégral de l'image, soit au moins la lecture de l'ensemble des données de l'image.

D'autre part, le traitement des voxels aux bords des blocs ne dépend pas des voxels dans les blocs adjacents mais plutôt de voxels « virtuels » ajoutés par symétrie. Cela engendre des effets de blocs sur le résultat final, similaires à ceux obtenus avec JPEG en imagerie 2D. Un autre but de l'invention est d'éliminer tout artefact de type "effet de bloc".

Egalement, il y a lieu d'ajouter au temps de traitement, le temps associé à deux autres étapes : une étape de fragmentation et une étape de fusion qui nécessitent des accès au disque dur, augmentant notablement le temps de calcul eu égard au volume de données des images 3D traitées. Le temps de traitement en est alors accru. Un but de l'invention est de diminuer le temps de traitement pour la conversion des données de l'image.

Encore d'autre part, un espace disque supplémentaire est nécessaire pour sauvegarder les différents blocs et les calculs effectués sur ceux-ci. Cet espace disque est égal à la taille de l'objet. Par exemple pour l'objet de la figure 1, il faut compter 150 gigas octets d'espace de stockage supplémentaire sur le disque dur. Un autre but de l'invention est alors de diminuer la consommation d'espace mémoire lors du traitement des données. Notamment, la mémoire vive disponible est généralement limitée. Il existe alors un besoin de permettre le traitement d'images multidimensionnelles de grande taille en tenant compte de l'espace mémoire vive disponible.

Les mêmes limitations sont présentes pour les objets 2D de grandes dimensions et les solutions par sous-blocs similaires à celle exposée précédemment.

On connaît également des procédés de traitement d'image appliqués à l'acquisition d'images satellitaires et à la vidéo.

Les méthodes utilisées pour le traitement vidéo considèrent un axe de filtrage privilégié, l'axe temporel, selon lequel est effectué un filtrage glissant par fenêtre, les deux autres axes étant traités par une transformée (par exemple en ondelettes) 2D conventionnelle. Dans cette solution, un chargement complet des images ou trames est effectué en mémoire à chaque instant de la vidéo, par exemple des images de taille 1920x1080 pixels si l'on considère le format vidéo HD 1080i ou 1080p.

Ce chargement complet des images requiert des ressources importantes en mémoire vive dont l'invention vise à en limiter la taille. En effet, une coupe 2D d'un cube 3D (par exemple figure 1) peut avoir une très grande résolution, supérieure à 8000x8000 pixels, ce qui rend délicate l'application d'une approche vidéo (2D+t) car elle nécessiterait le stockage en mémoire vive de plusieurs coupes 2D de très grande résolution, ce qui est difficile voire impossible pour des systèmes actuels.

En outre, le fait de privilégier un axe pour la conversion entraîne des complications dans l'exploitation de l'image convertie. Par exemple pour une image 3D dont une direction (O,z) de conversion est privilégiée, la visualisation d'une coupe selon le plan (O,x,y) nécessite la synthèse de toute l'image 3D. Il y a donc un besoin à ne pas privilégier un axe car l'ensemble des dimensions doit être considéré de façon équivalente. Un autre but de l'invention est alors de proposer une solution de conversion d'images de grandes tailles ne favorisant pas une dimension particulière de l'image multidimensionnelle.

Dans le cas de l'acquisition satellitaire, le satellite effectue une rotation autour de la terre et une acquisition simultanée par un capteur monodimensionnel. L'image 2D acquise est ainsi infinie dans la direction de déplacement du satellite. Au même titre que la vidéo, les procédés utilisés réalisent alors une conversion en privilégiant l'axe de déplacement et en chargeant l'intégralité de l'image 1D acquise à un instant donné par le capteur. Les mêmes problématiques que pour la conversion vidéo s'appliquent.

Au moins un des buts indiqués précédemment est atteint par la présente invention par la détermination d'une fenêtre de parcours de l'image en cours d'acquisition en fonction de la taille de la mémoire vive disponible indépendamment de la connaissance de la taille totale de l'image et par l'application d'une transformée en ondelettes multidimensionnelle sur le sous-bloc défini par la fenêtre à chaque emplacement de son parcours. La fenêtre parcourt ensuite l'image au fur et à meure de son acquisition. On peut ainsi procéder au calcul de la transformée sans connaissance a priori de l'image finale et, grâce à l'approche par sous-blocs, au traitement d'images de grande dimension.

A cet effet, l'invention a tout d'abord pour objet un procédé de conversion de données brutes numériques multidimensionnelles correspondant à des points composant une image 2D ou 3D de taille inconnue, le procédé comprenant :

- une étape de dimensionnement d'une fenêtre multidimensionnelle pour le parcours de ladite image, ledit dimensionnement étant fonction de la taille d'une mémoire tampon ;
- une étape de parcours de ladite image comprenant le déplacement de ladite fenêtre dans l'image selon les axes (dimensionnels) de l'image ;
- à chaque position de ladite fenêtre dans l'image :

   ∘ une étape d'acquisition et de chargement, dans ladite mémoire tampon, des données brutes ($x_k$) de la partie de ladite image définie par la fenêtre ;
   ∘ une étape de conversion comprenant une étape de calcul de la transformée en ondelettes multidimensionnelle de ladite partie chargée à l'aide d'au moins un filtre à support compact pour générer des coefficients basse fréquence ($s_k$) et haute fréquence ($d_k$) ;
∘ une étape de sauvegarde desdits coefficients générés.

On entend par "taille inconnue" le fait que la taille de l'image selon les divers axes de celle-ci est soit inconnue du fait que le traitement de conversion est effectué au fur et à mesure ("au fil de l'eau") de l'acquisition de données sans connaître la fin de cette acquisition, soit déterminable mais non calculée et non utilisée pour la procédé de conversion (par exemple si les données sont déjà stockées sur un disque dur, il est possible de déterminer les dimensions de l'image résultante mais l'invention ne requiert pas une telle connaissance).

Les données brutes numériques (notées $x_k$ pour le point k) sont des données représentant une valeur numérique de mesure physique, par exemple la luminance en un point (pixel, voxel) par échographie, sondage, scannage, rayon X, .... Elles sont généralement acquises selon trois axes orthogonaux.

La transformée en ondelettes est effectuée à partir des données brutes en mémoire vive.

La fenêtre utilisée est régulière, de type fenêtre 2D dans le cas d'images surfaciques et de type cube ou parallélépipède dans le cas d'une image volumique. La "partie définie par la fenêtre » regroupe l'ensemble des points englobés/enfermés par les contours de la fenêtre apposée sur l'image.

Un "filtre à support compact" est bien connu de l'homme de l'art. Un filtre à support compact est tel que les coefficients du filtre sont nuls en dehors d'une certaine fenêtre (filtre de largeur finie) qui correspond au « support du filtre ». En d'autres termes le filtre est à réponse impulsionnelle finie. L'utilisation de filtres à support compact permet d'effectuer des transformées en ondelettes en utilisant un nombre limité de données brutes d'origine, et donc d'effectuer de telles transformées sur des sous-blocs de l'image finale et non l'intégralité de l'image.

Selon l'invention, le dimensionnement de la fenêtre de parcours indépendamment de la taille de l'image et le parcours de l'image par cette fenêtre permettent de traiter l'image au fil de son acquisition sans connaissance à priori de l'image dans son intégralité (autres points et/ou taille finale).

Pour simplifier les calculs et donc diminuer les ressource et le temps nécessaire, il est prévu que lesdits filtres sont des filtres séparables monodimensionnels.

En particulier, ladite étape de calcul comprend :

- successivement selon chacun des axes dimensionnels de ladite partie chargée, une étape de calcul de la transformée monodimensionnelle en ondelettes séparables de chacune des lignes s'étendant selon ledit axe, ladite étape de calcul de transformée de chacune des lignes comprenant :

    ∘ pour chaque point (k) d'une ligne de ladite partie chargée, le calcul d'un coefficient ($s_k$, $d_k$) par transformée en ondelettes séparables à partir des données stockées en mémoire tampon.

Ainsi, on effectue une décomposition de la conversion en un parcours ligne par ligne selon successivement les deux ou trois dimensions de l'image et par le calcul des coefficients locaux de transformée en ondelettes séparables. Cette approche permet de calculer les coefficients finaux de conversion par multipasse (selon chacune des dimensions) en utilisant des filtres plus simples et ainsi de simplifier considérablement les calculs qui en découlent.

Dans un mode de réalisation, ladite transformée en ondelettes monodimensionnelle est une transformée par banc de filtres :

$$s_k = h_0 x_{2k} + \sum_{i=1}^{n} h_i (x_{2k-i} + x_{2k+i})$$

$$d_k = g_0 x_{2k+1} + \sum_{i=1}^{n} g_i (x_{2k+1-i} + x_{2k+1+i})$$

où $s_k$ et $d_k$ sont les coefficients ($s_k$ : basse fréquence ; $d_k$ : détails haute fréquence) de la transformée calculés respectivement aux points 2k et 2k+1 le long de la ligne parcourue, et $\{h_i\}$ et $\{g_j\}$ sont respectivement les coefficients de filtres symétriques passe-bas et passe-haut.

Selon une alternative, ladite transformée en ondelettes monodimensionnelle est une transformée par schéma lifting à 2N pas :

$$d_k^0 = x_{2k+1}$$

$$s_k^0 = x_{2k}$$

$$d_k^n = d_k^{n-1} - \sum_{i=1}^{L_{2n+1}/2} \alpha_i^{2n+1}(s_{k+1-i}^{n-1} + s_{k+i}^{n-1}) \quad \forall\, n \geq 1$$

$$s_k^n = s_k^{n-1} + \sum_{i=1}^{L_{2n}/2} \alpha_i^{2n}(d_{k-i}^n + d_{k-1+i}^n) \quad \forall\, n \geq 1$$

où $s_k^N$ et $d_k^N$ sont les coefficients de la transformée calculés respectivement aux points 2k et 2k+1 le long de la ligne parcourue, et $\{\alpha_i^n\}$ sont les coefficients des opérateurs de prédiction et de mise à jour du schéma lifting.

Il est également envisagé que lesdits filtres sont des filtres multidimensionnels non séparables, auquel cas le calcul des coefficients de conversion est réalisé en une seule passe mais nécessite des ressources de calcul plus puissantes.

De par l'utilisation des filtres à support compact, le calcul des coefficients est dit "local". Notamment, l'étape de calcul de la transformée en ondelettes multidimensionnelle peut comprendre le calcul en un point (k) d'un desdits coefficients ($s_k$, $d_k$) de transformée en ondelettes et la substitution, en mémoire tampon, de la donnée associée au point (k) par ledit coefficient ($s_k$, $d_k$) calculé.

Cette substitution permet de diminuer la taille de mémoire nécessaire au stockage des coefficients de transformée. En effet, on peut effectuer cette substitution dès que la donnée à écraser n'est plus utile pour le calcul de coefficients ultérieurs, ce qui est le cas de par l'utilisation de filtres à support compact.

Cette approche est compatible aussi bien avec des filtres non séparables qu'avec des filtres séparables pour lesquels les passes multiples selon les différentes dimensions de l'image/de la partie chargée nécessitent le remplacement des anciennes données par les coefficients (intermédiaires) calculés pour chaque nouvelle passe.

Afin de n'effectuer la substitution que lorsque la donnée à écraser n'est plus utile, il est prévu, avant ladite étape de substitution, que ledit coefficient calculé (sk, dk) est stocké temporairement dans une mémoire temporaire (Temp).

Notamment, lorsque la transformation en ondelettes met en oeuvre des filtres séparables monodimensionnels de largeur maximale (M), il est envisagé que ladite mémoire temporaire (Temp) est un registre à décalage de taille au moins égale à ⌊M/2⌋, où ⌊ ⌋ est la fonction partie entière inférieure. Ainsi, le décalage introduit par le registre permet d'attendre que le filtre de transformée en ondelettes ait "glissé" d'un nombre suffisant de points pour permettre l'écrasement par substitution d'une donnée (d'un point) par un coefficient calculé et stocké dans le registre. Du fait de la nature monodimensionnelle du filtre, cette mémoire temporaire est de dimension réduite.

En alternative, lorsque la transformation en ondelettes met en oeuvre des filtres séparables monodimensionnels de largeur maximale (M), il est également envisagé que la taille de ladite mémoire temporaire (Temp) est au moins égale à la valeur maximale des dimensions de ladite partie chargée en mémoire tampon et ladite substitution comprend la copie de ladite mémoire temporaire dans ladite mémoire tampon lorsque tous les coefficients (sk, dk) de ladite ligne parcourue sont calculés et stockés dans la mémoire temporaire (Temp). Ainsi, lors du calcul de la transformée par ondelettes ligne par ligne selon les deux ou trois dimensions de la zone chargée, l'on stocke les coefficients de l'ensemble d'une ligne avant d'effectuer la substitution de la ligne entière par tous les coefficients calculés. En effet, les données ne sont plus utiles une fois la ligne entièrement calculée puisque les filtres sont monodimensionnels (les données d'une même ligne s'auto-suffisent pour le calcul des coefficients).

Une mémoire temporaire plus grande pour stocker temporairement des données selon plusieurs dimensions peut être prévue dans le cas de filtres non séparables.

Dans un mode de réalisation, le procédé comprend, une étape d'ordonnancement desdits coefficients (sk, dk) pour séparer les coefficients basses fréquences (sk) et hautes fréquences (dk). Cet ordonnancement est effectué de sorte à conserver les positions relatives des coefficients dans l'image. Il peut être effectué :

- une fois que lesdits coefficients (sk, dk) ont été calculés pour la totalité de la partie chargée et ont été substitués dans la mémoire tampon, ou

- dans le cas de filtres séparables monodimensionnels, à la fin du calcul de transformée d'une ligne entière parcourue ou à la fin du calcul des transformées selon tout un axe dimensionnel de l'image.

Notamment, les coefficients sont ensuite sauvegardés séparément dans un fichier numérique relatif aux basses fréquences (coefficients sk) et un ou plusieurs fichiers numériques relatifs aux détails haute fréquence (coefficients dk). Il est ainsi possible, à partir du seul fichier des coefficients basse fréquence, de synthétiser l'image finale avec une résolution plus basse.

Dans l'approche multi-résolution permettant de travailler par la suite à différents niveaux de résolution de l'image, il est prévu que le procédé comprend, pour chaque position de ladite fenêtre, une pluralité d'itérations de ladite étape de conversion, ladite étape de calcul de transformée en ondelettes d'une itération étant effectuée sur les coefficients (sk, dk) générés lors de l'itération antérieure. Il est couramment pratiqué de une à cinq itérations. Le nombre d'itérations peut cependant être supérieur selon la résolution initiale de l'image.

Notamment, lorsque les coefficients sont substitués dans la mémoire vive, l'étape de calcul de la transformée en ondelettes reste inchangée puisqu'elle s'applique non plus aux anciennes valeurs stockées en mémoire vive mais aux coefficients nouvellement calculés et stockés dans la mémoire vive.

Selon les dimensions choisies de la fenêtre, ledit parcours comprend le déplacement de ladite fenêtre, selon successivement chacun des axes de l'image, d'un pas égal à la dimension de ladite fenêtre selon l'axe de déplacement.

Il est également envisagé que ledit dimensionnement de la fenêtre est également fonction de la longueur des filtres utilisés pour la transformation en ondelettes.

Afin d'éviter les effets de bords connus dans les solutions de l'art antérieur du type fragmentation en sous-blocs, il est prévu que lors dudit chargement, on charge également des données brutes ($x_k$) associées à des points externes à la fenêtre et voisins des bordures de ladite fenêtre, de sorte à effectuer ladite transformée en ondelettes des points internes au voisinage desdites bordures en tenant compte desdites données des points voisins externes. Les points voisins choisis sont ceux qui entrent dans le calcul des coefficients au niveau des points de la partie chargée au voisinage des frontières de la fenêtre et dépendent de la largeur des filtres utilisés.

Lorsque des filtres séparables monodimensionnels de largeur 2p+1 sont utilisés, on charge "p" pixels/voxels en plus par ligne à parcourir de chaque côté de la fenêtre.

Les points "internes" sont les points englobés/enfermés dans les contours de la fenêtre considérée, au contraire des points "externes".

Afin d'accroître la vitesse de conversion de l'image entière ou de s'adapter à la vitesse d'acquisition des données, il est envisagé de paralléliser lesdites étapes de chargement et de conversion pour au moins deux fenêtres distinctes le long dudit parcours de l'image.

L'invention a également pour objet un système pour la mise en oeuvre du procédé. Le système pour la conversion de données brutes numériques (xk) multidimensionnelles correspondant à des points (k) composant une image 2D ou 3D de taille inconnue, comprend :

- des moyens de dimensionnement d'une fenêtre multidimensionnelle pour le parcours de ladite image, ledit dimensionnement étant fonction de la taille d'une mémoire tampon ;

- des moyens agencés pour parcourir ladite image par déplacement de ladite fenêtre dans l'image selon les axes de l'image ;

- des moyens d'acquisition et de chargement agencés pour acquérir et charger, à chaque position de ladite fenêtre dans l'image, dans ladite mémoire tampon, des données brutes (xk) de la partie de ladite image définie par la fenêtre ;

- des moyens de conversion agencés pour calculer la transformée en ondelettes multidimensionnelle de ladite partie chargée à l'aide d'au moins un filtre à support compact pour générer des coefficients basse fréquence (sk) et haute fréquence (dk) ;

- des moyens de sauvegarde aptes à sauvegarder en mémoire lesdits coefficients générés.

L'invention a également pour objet un procédé de synthèse d'un plan dans une image 3D convertie par transformée en ondelettes comme présenté ci-dessus, comprenant une étape de détermination de l'ensemble desdites parties de l'image intersectées par ledit plan, une étape de transformée inverse en ondelettes des coefficients desdites parties déterminées et une étape de synthèse dudit plan à partir des données calculées lors de l'étape de transformée inverse.

Notamment, l'étape de transformée inverse est réitérée selon le niveau de résolution souhaité.

Egalement, il peut être prévu une étape de transmission des coefficients desdites parties depuis un serveur vers un calculateur, le calculateur effectuant ladite étape de transformée inverse au fur et à mesure de la réception desdites parties.

L'invention s'applique notamment au traitement (transformée en ondelettes) au fil de l'acquisition d'images médicales par scanner, d'images de prospection terrestre, par exemple des images sismiques, ou d'autres données massives ne permettant pas d'être stockées en totalité en mémoire ou encore en cours d'acquisition (donc inconnues dans leur totalité à l'instant t).

L'invention sera mieux comprise à l'aide de la description détaillée ci-dessous et des figures annexées dans lesquelles :

- Fig. 1 représente deux vues (Fig. 1a et 1b) d'un exemple de visualisation d'un cube sismique 3D ;

- Fig. 2 illustre une étape du processus de l'analyse multirésolution pour l'objet appelé "Mercury" selon deux vues (Fig. 2a et Fig. 2b) ;

- Fig. 3 illustre l'objet "Mercury" à différents niveaux de simplification/décomposition (Fig. 3a à 3d);

- Fig. 4 illustre le principe de l'analyse (Fig. 4a) et de la synthèse (Fig. 4b) multirésolution ;

- Fig. 5 décrit schématiquement une solution connue pour le traitement des données 3D massives ;

- Fig. 6 illustre la forme des bancs de filtres considérés (filtre passe bas en Fig. 6a et filtre passe haut en Fig. 6b);

- Fig. 7 illustre un exemple de transformée en ondelettes par schéma lifting à 2 pas ;

- Fig. 8 illustre les coefficients de l'opérateur de prédiction ou de mise à jour du $n^{\text{ième}}$ pas lifting pour le schéma de transformée de la Fig. 7 ;

- Fig. 9 représente schématiquement les différentes étapes de la méthode proposée selon la présente invention ;

- Fig. 10 illustre différentes méthodes (Fig. 10a à 10c) pour la gestion des bords ;

- Fig. 11 illustre la gestion des bords avec l'approche classique (b) et avec l'approche adoptée dans la présente invention (c) ;

- Fig. 12 montre l'évolution des mémoires tampon et supplémentaire utilisées au fur et à mesure de l'avancement du traitement ;

- Fig. 13 illustre l'évolution de $R$ (ratio taille à charger en mémoire sur taille mémoire utilisée en raison de la gestion des bords) et $S_T$ (taille des données à charger en mémoire) en fonction de la taille $x$ de la zone à traiter pour le filtre 9/7 ;

- Fig. 14 représente l'organigramme d'un exemple de réalisation de l'invention ;

- Fig. 15 montre l'évolution de la zone à filtrer respectivement selon l'axe x (Fig. 15a), y (Fig. 15b) et z (Fig. 15c) au cours de l'execution de l'algorithme ;

- Fig. 16 est un histogramme de la mémoire RAM utilisée pour le traitement de différents objets ; et

- Fig. 17 est un graphique représentant le temps de calcul en fonction de la taille de l'objet 3D.

Rappel sur les transformées en ondelettes

Pour le calcul de la transformée en ondelettes, on utilise les transformées les plus courantes dans le domaine de la compression d'images et de vidéos et qui se divisent en deux grandes familles : les transformées par bancs de filtres et les transformées par schéma lifting.

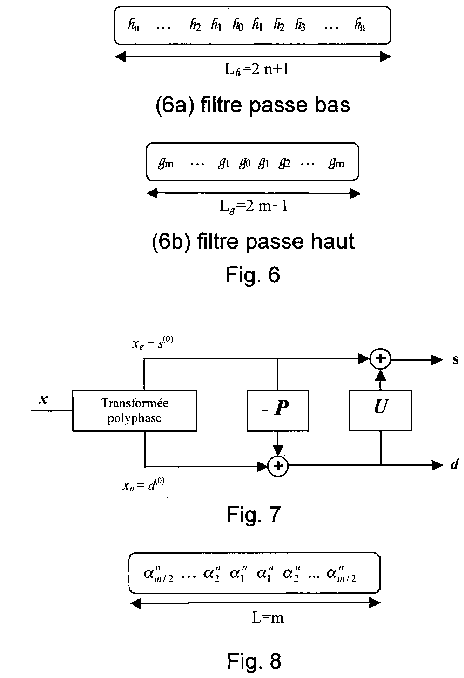

Dans le cas des transformées par bancs de filtres, on utilise les filtres les plus courants qui sont le filtre biorthogonal 9/7 Daubechies et le filtre 5/3 (les deux nombres indiquent respectivement la longueur $L_h$ du filtre passe

bas et la longueur $L_g$ du filtre passe haut) et le filtre de Haar mais la méthode reste valide pour tous les filtres à support compact. La figure 6 montre la forme des bancs de filtres considérés.

Les filtres passe haut (figure 6b - coefficients {$h_i$}) et passe bas (figure 6a - coefficients {$g_i$}) sont symétriques de longueurs impaires.

Les formules qui permettent le calcul des coefficients basses fréquences notés $s_k$ et les coefficients d'ondelettes hautes fréquences $d_k$ du signal d'entrée $x_k$ sont données par:

$$s_k = h_0 x_{2k} + \sum_{i=1}^{n} h_i (x_{2k-i} + x_{2k+i}) \qquad (1a)$$

$$d_k = g_0 x_{2k+1} + \sum_{i=1}^{n} g_i (x_{2k+1-i} + x_{2k+1+i}) \qquad (1b)$$

Pour l'application de ces formules, les points $x_k$ du signal d'entrée sont tels que $x_k$ et $x_{k+1}$ sont des points voisins le long d'une même dimension.

La transformée par schéma lifting est une transformée en ondelettes de deuxième génération introduite par Sweldens en 1996 et qui consiste à séparer le signal en deux canaux (transformée polyphase) et d'appliquer ensuite des opérations de prédictions et de mise à jour pour obtenir la basse fréquence (BF) et la haute fréquence (HF) du signal. La figure 7 montre un étage lifting composé par deux pas lifting : P représentant l'opération de prédiction et U celle de mise à jour (U=update).

Notons ($L_1$, $L_2$, ..., $L_N$) un schéma lifting à N pas (N/2 étages) où $L_{2n+1}$ désigne le nombre de coefficients du $n^{ème}$ opérateur de prédiction et $L_{2n}$ désigne le nombre de coefficients du $n^{ème}$ opérateur de mise à jour. L'opérateur de chaque pas lifting est symétrique de longueur paire.

La figure 8 montre la forme des coefficients de l'opérateur de prédiction ou de mise à jour.

Les formules qui calculent le coefficient d'ondelettes d'indice $k$ du $n^{ème}$ étage lifting (noté $s_k^n$ et $d_k^n$) du signal d'entrée $x_k$ sont :

$$d_k^0 = x_{2k+1} \qquad (2a)$$

$$s_k^0 = x_{2k} \qquad (2b)$$

$$d_k^p = d_k^{p-1} - \sum_{i=1}^{L_{(2p+1)/2}} \alpha_i^{2p+1} (s_{k+1-i}^{p-1} + s_{k+i}^{p-1}) \qquad \forall p \geq 1 \qquad (2c)$$

$$s_k^p = s_k^{p-1} + \sum_{i=1}^{L_{2p/2}} \alpha_i^{2p} (d_{k-i}^p + d_{k-1+i}^p) \qquad \forall p \geq 1 \qquad (2d)$$

Le filtre transverse 5/3 peut être implémenté à l'aide d'un schéma lifting (2,2) et le filtre 9/7 par le schéma lifting à deux étages (4 pas lifting) (2,2,2,2).

Le rendement et le temps de calcul de la méthode dépendent énormément du type et de la taille du filtre utilisé.

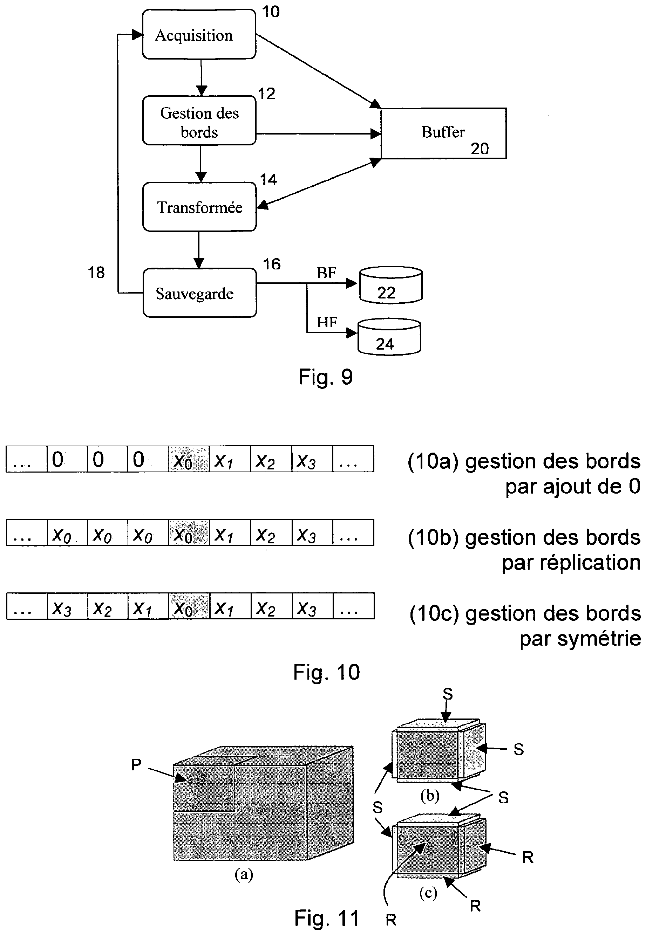

Le procédé de conversion selon l'invention va maintenant être décrit plus en détail en référence tout d'abord à la figure 9. Notamment, l'exemple présenté ci-après s'appuie sur l'utilisation de transformées en ondelettes séparables. Le procédé comprend les différentes étapes suivantes :

- le signal d'entrée est pour cet exemple un objet 3D volumique. La première étape 10 consiste en l'acquisition des données pour le chargement de celles-ci dans une mémoire buffer 20. Le traitement ultérieur local (le calcul de la transformée en ondelettes) sera appliqué sur ces données chargées. Lors de l'étape d'acquisition, sont définies la partie à charger et la charge dans le buffer 20. Le rendement de la méthode est fortement lié à la manière d'acquérir les données.

Cette acquisition peut consister en la lecture d'un fichier déjà existant en mémoire ou l'acquisition concrète de nouvelles mesures par un capteur, type scanner, au fur et à mesure du traitement.

L'acquisition réalisée est dite régulière en ce sens qu'elle repose sur un échantillonnage régulier, typiquement des lignes régulièrement espacées selon les trois dimensions de l'image (repère orthogonal), les points étant préférablement alignés les uns avec les autres.

Les données d'acquisition sont la luminance $x_k$ en un point k de l'image. La valeur k est un indice incrémenté au fur et à mesure de l'acquisition de telle sorte que deux points voisins ont des indices voisins. Le point k peut également être exprimé selon ses coordonnées dans le repère orthogonal : $X_k, Y_k, Z_k$ ;

Le buffer 20 est la mémoire réservée par l'utilisateur pour le calcul de la transformée en ondelettes. La taille de cette mémoire définit la taille de la zone de l'objet que l'algorithme peut traiter et définit donc la quantité de données $x_k$ à charger dans le buffer 20 lors de l'étape 10. Plus sa taille est grande et plus l'algorithme va être rapide.

- l'étape de gestion des bords 12 permet de traiter les problèmes de bords qui peuvent se présenter éventuellement lors du calcul de la transformée ;

- l'étape suivant de transformée 14 permet de calculer la transformée en ondelettes de la zone de l'objet 3D chargée dans le buffer 20 ;

- enfin, la sauvegarde 16 permet de séparer les images de basses résolutions ou basses fréquences BF (Ci) et les détails de hautes fréquences HF (Di) de l'objet 3D, et de les sauvegarder dans les fichiers 22, 24 appropriés sur le disque.

La sauvegarde 16 relance (18) le processus pour la partie suivante si l'objet n'a pas été traité dans sa totalité, c'est-à-dire par l'acquisition 10 d'une autre partie de l'objet pour traitement.

La gestion des bords (12) nécessite les éléments suivants :

Il y a plusieurs manières pour gérer les bords comme par exemple la symétrie, la réplication des voxels, l'ajout de pixels identique au pixel en cours de traitement... mais l'utilisation de ces méthodes sur les différentes zones chargées va introduire un effet de blocs et une reconstruction qui peut ne pas être exacte. Pour résoudre ce problème le calcul est réalisé en utilisant les vrais voxels lorsqu'ils sont disponibles (c'est-à-dire lorsque le bord de la zone à traiter ne correspond pas à un bord de l'image). Puisque les filtres utilisés sont des filtres à support compact, on est capable de déterminer le nombre et l'emplacement des voxels à utiliser pour le calcul des coefficients aux bords. Ce qui veut dire que l'on charge le vrai voxel lorsqu'il existe, sinon l'on adopte une des approches classiques de symétrie. Dans ce cas, on propose d'effectuer la symétrie par rapport au dernier voxel disponible (cf fig.10(c)) mais les autres approches restent valides.

Supposons par exemple que l'on traite la partie P (cf. fig 11(a)) d'un objet 3D. L'approche classique charge cette zone P en mémoire et effectue ensuite la symétrie des voxels chargés (parties S figure 11(b)) et ce, quel que soit la position du bloc à traiter dans l'objet 3D. Selon l'invention, on charge en mémoire la zone à traiter, plus un certain nombre de voxels existant dans l'objet 3D nécessaires pour éviter les effets de bords (partie R de la figure 11(c)). Les voxels inexistants (par exemple dans le cas où l'on traite un bloc sur le bord de l'objet 3D cf. figure 11(c)) sont alors symétrisés comme décrit précédemment (partie S de la figure 11(c)). Il est à noter que lorsque le bloc traité ne se situe pas sur l'un des bords de l'objet 3D, alors aucun traitement de symétrisation n'est nécessaire car dans ce cas de figure, tous les voxels nécessaires au filtrage (parties R) existent dans l'objet 3D et sont chargés en mémoire. L'effet de bord introduit par le traitement local des données est ainsi évité.

Les zones R ont une épaisseur (perpendiculaire au plan de la fenêtre) de $\lfloor L/2 \rfloor$ voxels (L largeur du filtre utilisé).

Après le chargement de la zone à traiter avec les bords correspondants (parties S et R), on calcul les coefficients en ondelettes. Pour cela, on utilise les mêmes équations de filtrage (formules 1 ou 2) mais en changeant les indices. Ainsi, pour les transformées par bancs de filtres on a :

$$s_k = h_0 x_{2k} + \sum_{i=1}^{L_h/2} h_i (x_{2k-i} + x_{2k+i}) \quad k = L_h/2 \,..\, T + L_h/2$$

$$d_k = g_0 x_{2k+1} + \sum_{i=1}^{L_g/2} g_i (x_{2k+1-i} + x_{2k+1+i}) \quad k= L_g/2 .. T+L_g/2$$

et pour les transformées par schéma lifting:

$$d_k^0 = x_{2k+1} \qquad k= L/2 .. T+L/2$$

$$s_k^0 = x_{2k} \qquad k= L/2 .. T+L/2$$

$$d_k^p = d_k^{p-1} - \sum_{i=1}^{L_{2p+1}/2} \alpha_i^{2p+1}(s_{k+1-i}^{p-1} + s_{k+i}^{p-1}) \qquad \forall p \geq 1 \qquad\qquad k= L/2 .. T+L/2$$

$$s_k^p = s_k^{p-1} + \sum_{i=1}^{L_{2p}/2} \alpha_i^{2p}(d_{k-i}^p + d_{k-1+i}^p) \qquad \forall p \geq 1 \qquad\qquad k= L/2 .. T+L/2$$

Avec T la taille de la zone à traiter selon la direction considérée.

Comme indiqué précédemment, la partie de l'image chargée dépend directement de la taille du buffer disponible 20. Ci-après, le calcul de la taille mémoire nécessaire pour le traitement :

La taille de la mémoire vive 20 nécessaire pour le filtrage d'un bloc, hors gestion des bords se calcule comme suit :

Les calculs de l'espace mémoire nécessaire pour le traitement au fil de l'eau pour les transformées par bancs de filtres, calculs ci-dessous fait en référence aux filtres biorthogonaux, restent valides pour les transformées par schéma lifting à 2 pas en changeant les coefficients et les longueurs des filtres.

Soit $L_h$ et $L_g$ respectivement la longueur du filtre passe haut et passe bas et soit

$$M = \text{Max } (L_h, L_g). \qquad\qquad (3)$$

Pour traiter une partie de l'image de dimension

$$D = x * y * z , \qquad\qquad (4)$$

on a besoin d'un Buffer 20 de dimension B :

$$B = (x + L) * (y + L) * (z + L) \quad \text{avec } L = M\text{-}1 \qquad\qquad (5)$$

Puisque le même filtre est utilisé lors du filtrage pour chacune des trois dimensions (filtrage par filtres séparables), on a donc le même besoin en mémoire supplémentaire pour gérer les bords qui est donné par $\left\lfloor \dfrac{M}{2} \right\rfloor$ pour chaque côté. $\lfloor \ \rfloor$ Désigne la partie entière inférieure. Or M est impair, car les filtres sont de longueur impaire, donc $\left\lfloor \dfrac{M}{2} \right\rfloor = \dfrac{M-1}{2}$ . Le nombre de coefficients à ajouter dans chaque axe est donc donné par :

$$L = 2 * \left\lfloor \frac{M}{2} \right\rfloor = M - 1 \qquad\qquad (6)$$

En développant l'équation 5 on trouve que

$$B = L^3 + L^2(x + y + z) + L(xz + yz + xy) + xyz \qquad (7)$$

Pour le filtre 9/7 on a L = 8 et en supposant que x = y = z on aura

$$B(x) = 512 + 192x + 24x^2 + x^3 \qquad (8)$$

Cette équation donne la taille de la zone à traiter à chaque itération pour le filtre 9/7, en fonction de la taille du buffer 20. Par exemple, si l'on dispose de 1 Mo de Ram (20) et que l'on code les coefficients d'ondelettes en float (32 bits) on a :

$$B(x) = 1048576 \text{ octets pour } 262144 \text{ coefficients.}$$

Pour trouver la taille *x* d'un bord du bloc en nombre de coefficients, on résout l'équation suivante :

$$x^3 + 24x^2 + 192x - 261632 = 0$$

ce qui donne

$$s_1 = -40.0000 + 55.4256i$$

$$s_2 = -40.0000 - 55.4256i$$

$$s_3 = 56.0000$$

Or *x* est un entier positif d'où la solution x = 56. On peut donc choisir comme fenêtre délimitant la zone à charger (10) dans le buffer 20 un cube de côté 56 voxels au plus.

D'autres configurations de fenêtres peuvent être utilisées, notamment des parallélépipèdes plus ou moins allongés en fonction des pratiques.

On note également que la présente méthode permet de diminuer la zone de traitement (fenêtre) à un unique pixel/voxel : x=1. Le traitement des bords tel qu'exposé ci-après permet cette approche au pixel près au contraire des méthodes connues de fragmentation qui, en raison d'une gestion des bords peu efficaces, requièrent des fenêtres au moins aussi large qu'un demi-filtre.

Il faut ajouter à cette zone une autre zone mémoire 26 pour le calcul et la sauvegarde partielle des coefficients. En effet, pour le calcul de $s_k$, on doit faire une convolution en utilisant la formule (1a) et donc, on a besoin de connaître les valeurs des voxels $x_{(k-\left\lfloor\frac{M}{2}\right\rfloor)} \ldots x_k \ldots x_{(k+\left\lfloor\frac{M}{2}\right\rfloor)}$.

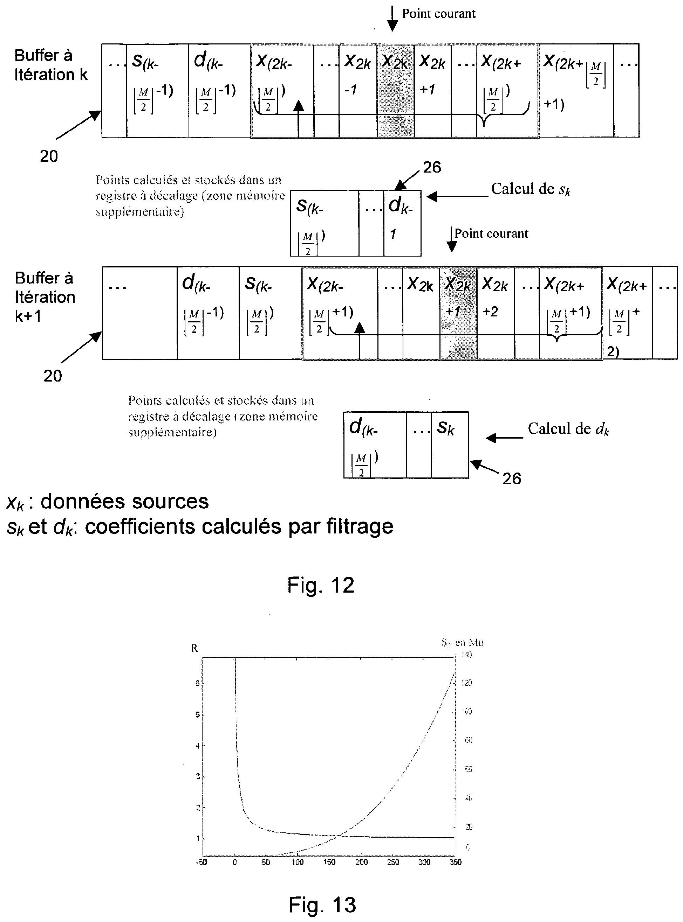

Ce qui veut dire qu'on ne peut sauvegarder dans le buffer les valeurs $s_{(k-\left\lfloor\frac{M}{2}\right\rfloor)} \ldots s_{k-1}$, précédemment calculées, qu'après le calcul des coefficients utilisant $x_{(k-\left\lfloor\frac{M}{2}\right\rfloor)} \ldots x_{k-1}$. D'où le besoin d'une zone mémoire sup-plémentaire 26 de taille $\left\lfloor\frac{M}{2}\right\rfloor$ pour sauvegarder temporairement les coefficients d'ondelettes calculés. La figure 12 montre l'évolution du contenu des mémoires utilisées au fur et à mesure qu'on avance dans le traitement de la zone chargée. Pour réduire le temps de calculs (éliminer les décalages effectués dans le registre à décalage), on surdimensionne cette mémoire supplémentaire en fixant sa taille à la valeur maximale des dimensions de la zone chargée (max $(x_c, y_c, z_c)$, avec $x_c, y_c, z_c$ les dimensions de la zone à traiter).

La taille mémoire nécessaire pour la gestion des bords se calcule comme suit :

La taille de la zone nécessaire pour la gestion des bords est fonction du filtre utilisé. D'après l'équation (6) on a $L=M-1$.

Soit $S_b$ la taille de la zone ajoutée en mémoire pour gérer les bords. Puisque la zone à traiter a une forme parallélépipédique, on va ajouter des voxels aux six faces, ce qui donne :

$$S_b = 2*(x*y*\frac{L}{2}) + 2*(x*z*\frac{L}{2}) + 2*(y*z*\frac{L}{2}) \qquad (9)$$

Après toutes simplifications faites, on obtient :

$$S_b = L*(x*y + x*z + y*z) \qquad (10)$$

On détermine ainsi le ratio taille mémoire totale sur taille mémoire du bloc :

Supposons que la zone à traiter soit un cube. Soit $S$ la taille de cette zone. En utilisant (4) on a $S=x^3$. La zone chargée en mémoire sera égale à $S_T=S+S_b$.

En utilisant (10) on obtient :

$$S_T = x^3 + 3Lx^2 \qquad (11)$$

Calculons le rapport $S_T$ sur $S_b$ qui correspond au rapport de la taille totale de l'image à traiter (avec gestion des bords) par rapport à la taille de l'image sans les bords :

$$R(x) = \frac{S_T}{S_b} = 1 + \frac{3L}{x} \qquad (12)$$

La courbe $R$ en fonction de $x$ pour le filtre 9/7 est donnée sur la figure 13. Pour minimiser le temps de traitement on a intérêt à prendre une dimension $x$ qui minimise $R$ (donc $x$ grand). Car plus le bloc est petit, plus on va faire d'accès disque supplémentaire pour gérer les bords des différentes parties. On a donc intérêt à avoir des gros blocs. On choisit $x$ de façon que le rapport $R$ soit le plus petit possible en tenant compte de l'espace mémoire disponible. En effet, plus $x$ augmente plus les besoins en mémoire vive augmente. Sur la figure 11, on trouve aussi la courbe de $S_T$ en fonction de $x$. Pour le filtre 9/7 on peut prendre $x = 200$ car à partir de cette valeur commence le palier et la variation de la courbe devient faible. Pour cette valeur de $x$ on aura besoin à peu près de 25 Mo de mémoire RAM.

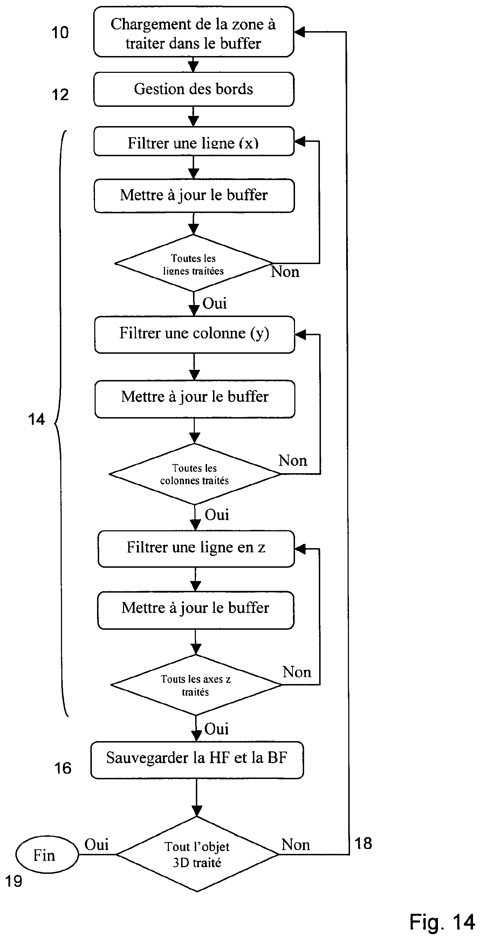

L'organigramme de l'algorithme de calcul de la transformée au fil de l'eau pour les transformées par bancs de filtres est donné par la figure 14. L'algorithme reste valide pour les transformées par schéma lifting à 2 pas en changeant les coefficients des filtres. Pour les schémas lifting à $N$ pas avec $N>2$ il faut apporter quelques modifications à l'algorithme en ajoutant les autres étages de calcul des coefficients des pas d'indices supérieur à 2. Ce qui veut dire que le filtrage en $x$ (cf. organigramme de la figure 14) est composé de $N/2$ blocs de filtrage où chaque bloc effectue un pas de prédiction et un pas de mise à jour.

Les étapes de l'algorithme sont les suivantes :

1. Ouverture du fichier d'entrées en lecture ou acquisition directe depuis un capteur ;
2. Ouvrir les fichiers de sorties en écriture, ceux où ont lieu la sauvegarde des coefficients calculés. On note qu'avec un niveau de décomposition d'une image 3D, il y a lieu de prévoir un fichier pour les coefficients basse résolution (basse fréquence) et sept pour les sept bandes hautes fréquences.
3. Tant qu'il reste des échantillons non traités faire

    3.1. Charger, par lecture ou acquisition (10) la partie à traiter définie par la fenêtre (zone de dimension $x*y*z$)

calculée précédemment.

3.2. La gestion des bords (12) est intégrée au calcul de la transformée (voir ci-dessous 3.3 à 3.5) en utilisant la zone de dimension *(x+L)\*(y+L)\*(z+L)* en non uniquement x\*y\*z.

Du fait des filtres séparables monodimensionnels utilisés, l'algorithme procède par passages sur les lignes successivement selon les trois dimensions (x, y, z).

3.3. On commence par le parcours selon l'axe y :

pour i parcourant l'axe z (1 : *z+L*)

3.3.1. pour j parcourant l'axe x (1 : *x+L*)

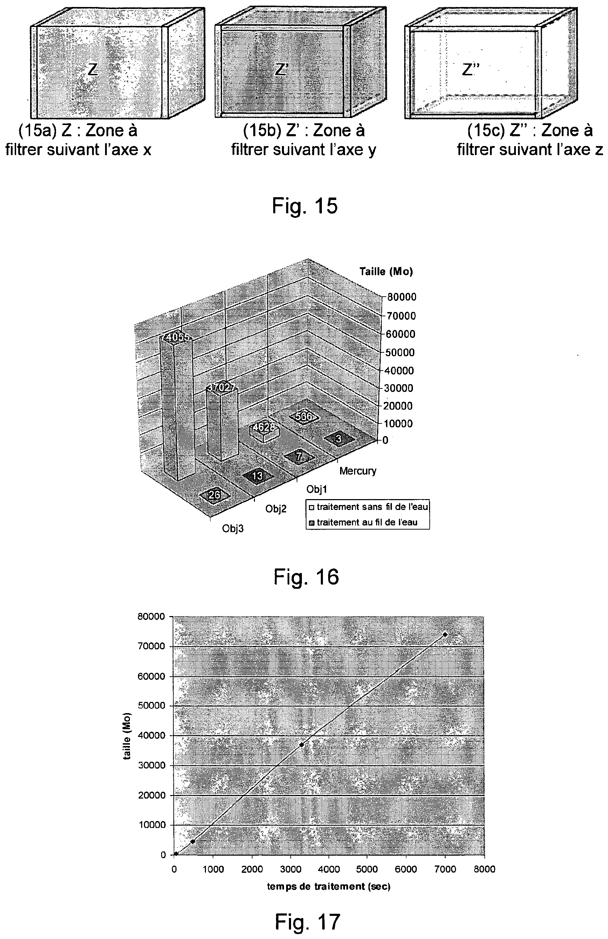

3.3.1.1. pour k parcourant l'axe y (L/2 : y+L/2) (figure 15(a) - cube moins les deux tranches latérales d'épaisseur L/2)

3.3.1.1.1. calculer $s_k = h_0 x_{(j,2k,i)} + \sum_{l=1}^{n} h_l (x_{(j,2k-l,i)} + x_{(j,2k+l,i)})$

3.3.1.1.2. calculer

$$d_k = g_0 x_{(j,2k+1,i)} + \sum_{l=1}^{n} g_i (x_{(j,2k+1-l,i)} + x_{(j,2k+1+l,i)})$$

3.3.1.1.3. ranger $s_k$ et $d_k$ dans vect, où vect représente un vecteur de float de dimension d=max(x, y, z) qui représente la mémoire supplémentaire 26

3.3.1.2. ordonner vect afin de séparer les coefficients BF et HF

3.3.1.3. recopier le contenu de Vect 26 dans le même emplacement dans le buffer 20

3.4. On poursuit par le passage selon l'axe x pour i parcourant l'axe z (1 : *z+L*)

3.4.1. pour j parcourant l'axe y (L/2 : *y*+L/2)

3.4.1.1. pour k parcourant l'axe x (L/2 : *x*+L/2) (figure 15(b) - cube fig.15(a) moins les deux tranches supérieures et inférieures d'épaisseur L/2)

3.4.1.1.1. calculer $s_k = h_0 x_{(2k,j,i)} + \sum_{l=1}^{n} h_l (x_{(2k-l,j,i)} + x_{(2k+l,j,i)})$

3.4.1.1.2. calculer $d_k = g_0 x_{(2k+1,j,i)} + \sum_{l=1}^{n} g_l (x_{(2k+1-l,j,i)} + x_{(2k+1+l,j,i)})$

3.4.1.1.3. ranger $s_k$ et $d_k$ dans vect

3.4.1.2. ordonner Vect

3.4.1.3. recopier le contenu de Vect dans le même emplacement dans le buffer

3.5. On finit par le parcours selon l'axe z
pour i parcourant l'axe y (L/2 : *y*+L/2)

3.5.1. pour j parcourant x (L/2 : *x*+L/2)

3.5.1.1. pour k parcourant l'axe z ((L/2 : z +L/2) (figure 15(c) - cube fig.15(b) moins les deux tranches avant et arrière d'épaisseur L/2)

3.5.1.1.1. calculer $s_k = h_0 x_{(j,i,2k)} + \sum_{l=1}^{n} h_l (x_{(j,i,2k-l)} + x_{(j,i,2k+l)})$

3.5.1.1.2. calculer

$$d_k = g_0 x_{(j,i,2k+1)} + \sum_{l=1}^{n} g_l (x_{(j,i,2k+1-l)} + x_{(j,i,2k+1+l)})$$

3.5.1.1.3. ranger $s_k$ et $d_k$ dans vect

3.5.1.2. ordonner Vect

3.5.1.3. recopier le contenu de Vect dans le même emplacement dans le buffer

3.6. on sauvegarde (16) les coefficient basse résolution $s_k$ dans le fichier approprié.

3.7. on sauvegarde (16) les coefficient haute résolution $d_k$ dans les fichiers approprié.

3.8. On déplace la fenêtre de sélection dans l'objet 3D si toutes les parties n'ont pas été traitées (18).

4. fermer (19) les fichiers de sorties et d'entrées.

Pour réaliser une décomposition multi-échelle, les étapes 3.3 à 3.5 sont réitérées (selon le niveau de décomposition choisi, de 1 à 5 généralement) à partir des coefficients calculés lors de l'itération précédentes et stockés dans le buffer 20. On procède à l'étape 3.6 que lorsque ces itérations sont finies.

Il est de noter que le traitement d'une partie de l'objet ne dépend pas du résultat des autres parties de l'objet 3D. Cette propriété est très importante car elle permet le traitement distribué de l'objet par plusieurs machines en même temps en donnant à chaque machine la partie de l'objet à traiter. Ce qui représente un atout important pour réduire encore plus le temps de calcul en utilisant des techniques comme les grilles de calculs et surtout lorsqu'il s'agit de traiter des objets de très grandes tailles.

Résultats obtenus par le procédé selon l'invention.

Tout les tests on été effectués avec un ordinateur équipé d'un processeur Intel E6400 cadencé à 2.13 Ghz, 2 Go de RAM et un disque dur Western Digital de 250 Go. Le filtre utilisé dans cet exemple, est le filtre de Haar lifté calculé sur les entiers, ce qui signifie que les valeurs de coefficients d'ondelettes obtenues seront entières. L'algorithme a été implémenté en C++.

Les résultats obtenus à partir de la méthode que nous proposons montre bien que la taille mémoire nécessaire est très petite même pour traiter des objets gigantesques. De plus, le traitement est effectué en un temps très réduit par rapport à la taille de l'objet, sans utiliser d'espace disque supplémentaire.

Le tableau suivant donne les temps de calculs et la taille mémoire utilisée pour effectuer une transformée en ondelettes sur un niveau de résolution (analyse sur un niveau de résolution) pour différentes tailles d'objets. Les objets correspondent à des cubes sismiques 3D mais des résultats identiques seraient obtenus sur d'autres types de données volumiques 3D (par exemple des données médicales). Les objets obj1 et obj2 et obj3 sont des objets qui ont été générés pour les tests.

| Objet traité | Taille de l'objet initial | Taille de l'objet basse fréquence obtenu | Mémoire utilisée pour le traitement | Temps du traitement entre l'objet initial et l'objet final |
|---|---|---|---|---|
| Mercury (fig.2) | 566 Mo | 71 Mo | 3 Mo | 55 secs |
| Obj1 | 4,52 Go | 565 Mo | 7 Mo | 7 min 40 secs |
| Obj2 | 36,16 Go | 4,52 Go | 13 Mo | 55 min 13 secs |
| Obj3 | 72,33 Go | 9,04 Go | 26 Mo | 1h et 57 min |

Tableau 1 : Coût mémoire et temps de calculs pour l'analyse de différents objets 3D. L'objet final correspond à l'objet après un niveau d'analyse par la transformée en ondelettes « au fil de l'eau ».

Calculons maintenant le coût de codage sans pertes des différentes sous bandes obtenues par la décomposition (la sous-bande BF et les sous-bandes HF). Pour cela nous allons calculer l'entropie de Shannon de chaque sous-bande par la formule :

$$H = -\sum_{i=0}^{n} p(i)\log_2(p(i)) \text{ bits/voxel} \tag{13}$$

où $n$ correspond au nombre de niveaux de luminance possibles que peut prendre un voxel d'une sous-bande donnée. Dans le cas d'une transformée sur les entiers et pour l'exemple proposé ici, $n=256$ pour la sous-bande basse fréquence, et $n=512$ pour chaque sous-bande de hautes fréquences.

La valeur $p(i)$ correspond à la probabilité d'apparition du niveau de luminance $i$.

L'entropie de la totalité de l'objet après transformation en ondelettes sur $N$ niveaux est donné par la formule suivante :

$$H_T = \frac{H_N(0)*D(N)}{D(0)} + \sum_{i=1}^{N}\left(\frac{D(i)}{D(0)}\sum_{j=1}^{7} H_i(j)\right) \text{ bits/voxel} \tag{14}$$

avec $H_i(j)$ est l'entropie de la $j$ème sous-bande du niveau $i$ ($i=0$ correspond à la sous-bande BF) et $D(i)$ la taille de l'objet au niveau $i$ (nombre de voxels dans l'objet au niveau $i$). $D(0)$ est la taille de l'objet d'origine.

Le coût total en octets de l'objet après transformation sur $N$ niveaux est donné par :

$$C = \frac{1}{8}\left[H_N(0)*D(N) + \sum_{i=1}^{N}\left(D(i)\sum_{j=1}^{7} H_i(j)\right)\right] \text{ octets} \tag{15}$$

Le tableau suivant donne l'entropie et le coût de codage de l'objet Mercury sur un niveau de décomposition en ondelettes.

Tableau 2: calcul des entropies exprimées en bits par voxel (bpv) de l'objet Mercury pour un niveau de décomposition en ondelettes.

| Entropie en bpv | Objet Mercury |
|---|---|
| Dimensions (voxels) | 1300*858*260 |
| Dimensions des sous bandes (voxels) | 650*429*130 |
| Entropie de la sous bande 0 (BF) | 7,252453 |
| Entropie de la 1ère sous bande HF | 5,548126 |
| Entropie de la 2ère sous bande HF | 4,739920 |
| Entropie de la 3ère sous bande HF | 3,840312 |
| Entropie de la 4ère sous bande HF | 5,442115 |
| Entropie de la 5ère sous bande HF | 4,021207 |
| Entropie de la 6ère sous bande HF | 3,369744 |
| Entropie de la 7ère sous bande HF | 2,756940 |
| Taille initiale de l'objet | 16 bpv soit 566 Mo |
| Entropie de l'objet initial | 7,281342 bpv soit 252 Mo |
| Entropie de l'objet transformé | 4,422760 bpv soit 152.9 Mo |

Nous remarquons que l'entropie théorique de Shannon de l'objet après une transformée en ondelettes sur un niveau de décomposition est très inférieure au coût de l'objet original sans transformation. Cet exemple illustre donc la faculté de la transformée en ondelettes à représenter sans perte et de façon plus compacte l'information.

D'un point de vue pratique, l'utilisation de codeurs entropiques sophistiqués tels que les codeurs arithmétiques contextuels permettraient d'obtenir des résultats encore meilleurs de compression sans perte.

Il est à noter que l'invention peut également être mise en oeuvre avec pertes.

La figure 16 montre la quantité mémoire nécessaire pour le traitement de différents objets au fil de l'eau. Il peut être observé que la mémoire utilisée est très petite et ne dépasse pas 5 ‰ pour Obj3 ce qui fait à peu près 26 Mo de RAM.

Sur la figure 17 est tracée la courbe du temps de calcul en fonction de la taille de l'objet traité. Il peut être observé que le temps de traitement est linéaire par rapport à la taille du fichier ce qui rend notre méthode capable de traiter des objets dépassant les téraoctets. En calculant la pente de la droite trouvé on peut faire sortir une fonction qui nous calcul le temps de calcul (sec) en fonction de la taille de l'objet (Mo). Cette fonction $f$ est donnée par l'expression suivante $f(S) = S / 10,61$ où $S$ représente la taille de l'objet en Mo. Pour un objet qui fait 500 Go le temps de traitement sera à peu près égal à 13 heures ce qui est rapide par rapport à la taille de l'objet puisque seulement la lecture du fichier binaire de l'objet 3D nécessiterait à peu près 4H en se basant sur un débit moyen de 40 Mo/s pour un disque standard.

L'exploitation de l'image 3D ainsi convertie et des coefficients calculés nécessite une synthèse des données. Cette synthèse peut être réalisée au fil de l'eau.

La mise en oeuvre au fil de l'eau de l'étape de synthèse ne nécessite pas de calculs ou de ressources supplémentaires. En effet, la synthèse est exactement l'inverse de l'étape d'analyse et ne demande pas de calculs supplémentaires. Les tests montrent qu'on obtient les mêmes temps et coûts que ceux qui sont obtenus pour l'analyse (tableau 1). Mais l'avantage de notre méthode est que nous sommes capables d'effectuer une synthèse locale des données.

De par l'utilisation de filtres à support compact, on procède à une synthèse locale des données.

Dans l'imagerie 3D, on est toujours confronté à des volumes énormes, et l'expert a besoin de visionner non pas tout l'objet en même temps (impossible à charger vu sa taille), mais plutôt une version basse résolution de l'objet pour se localiser et naviguer dans le volume et les trois plans $X$, $Y$ et $Z$ en haute résolution (fig.1). Avec l'approche proposée, on est capable de se localiser facilement grâce à la propriété spatio-fréquentielle des ondelettes et de l'implémentation dyadique. Après cette étape de localisation, on cherche les coefficients nécessaires pour remonter tous les niveaux des plans $X$, $Y$ et $Z$ à partir de la basse résolution. Pour afficher le plan transversal $Y$ par exemple, on n'a pas besoin de faire la synthèse de tout l'objet et après l'extraire mais tout simplement de rechercher juste les détails nécessaires pour effectuer la synthèse de ce plan. Cette caractéristique est très importante surtout lorsque l'on manipule des objets à distance car on ne peut pas se permettre de transmettre tout l'objet à cause de sa taille. On envoie donc que les coefficients d'ondelettes qui permettent de remonter les différents niveaux de résolutions jusqu'au niveau le plus détaillé. L'analyse peut commencer dès la réception des premiers coefficients d'ondelettes et cela permet de reconstituer le plan du niveau le plus résolu progressivement au fur et à mesure que l'on reçoit les coefficients, contrairement aux systèmes actuels qui passent directement du niveau le moins détaillé au niveau le plus détaillé en un seul coup.

Il est aussi possible de faire une analyse locale au sein même du plan, car les plans de coupe peuvent atteindre des résolutions dépassant 8000 * 8000 pixels (impossible à afficher dans leur totalité avec les écrans actuels dont la résolution maximale est de 2560*1600 pour les écrans 30 pouces). On peut donc faire l'analyse juste de la partie qui va être affichée ce qui permettra un gain au niveau bande passante, car on va envoyer moins de données, et un gain au niveau temps de calcul, car on va réduire encore plus la zone à traiter.

L'approche adoptée par la présente invention est basée sur le traitement des données au fur et à mesure de leur acquisition ou lecture ce qui permet une réduction maximale de la taille de mémoire vive nécessaire pour le traitement. L'invention permet ainsi :

- de traiter l'objet sans le fragmenter ;
- d'utiliser pour cela une taille mémoire minimale qui peut être définie par l'utilisateur ;
- d'obtenir un résultat de filtrage identique à celui que l'on aurait obtenu si la totalité de l'objet avait été chargée en mémoire. En effet, contrairement aux algorithmes actuels qui traitent les objets volumiques 3D par fragmentation, entraînant des artefacts aux bords des blocs fragmentés, l'approche proposée effectue une gestion du filtrage aux bords des blocs qui élimine tout artefact de type « effet de bloc » dû à la fragmentation ;
- une navigation aléatoire dans l'objet 3D transformé est possible. Par exemple, une extraction de trois plans x, y et z de n'importe quelle zone de l'objet est possible (cf. fig. 3) et une reconstruction en pleine résolution de ces trois plans est possible sans faire la transformée inverse de tout l'objet.

## Revendications

**1.** Procédé de conversion de données brutes numériques (xk) multidimensionnelles correspondant à des points (k) composant une image 2D ou 3D, le procédé comprenant :

- une étape de définition d'une fenêtre multidimensionnelle pour le parcours de ladite image;
- une étape de parcours de ladite image comprenant le déplacement de ladite fenêtre dans l'image selon les axes de l'image ;
- à chaque position de ladite fenêtre dans l'image :

  ∘ une étape d'acquisition et de chargement, dans ladite mémoire tampon, des données brutes (xk) de la partie de ladite image définie par la fenêtre ;
◦ une étape de conversion comprenant une étape de calcul de la transformée en ondelettes multidimensionnelle de ladite partie chargée à l'aide d'au moins un filtre à support compact pour générer des coefficients basse fréquence (sk) et haute fréquence (dk), la longueur du filtre passe haut étant $L_h$ et la longueur du filtre passe bas étant $L_g$ ;
◦ une étape de sauvegarde desdits coefficients générés, **caractérisé en ce que** l'étape de définition de la fenêtre multidimensionnelle est une étape de dimensionnement fonction de la taille B d'une mémoire tampon selon l'équation

$$B = \prod_{i=1}^{n}(x_i + L).$$ où L est le maximum des longueurs Lh et Lg moins un, n est un entier égal à 2 pour une image 2D et égal à 3 pour une image 3D et xi le nombre de points de la fenêtre multidimensionnelle sur l'axe i.

2. Procédé selon la revendication précédente, dans lequel lesdits filtres sont des filtres séparables monodimensionnels.

3. Procédé selon la revendication précédente, dans lequel ladite étape de calcul comprend :

- successivement selon chacun des axes de ladite partie chargée, une étape de calcul de la transformée monodimensionnelle en ondelettes séparables de chacune des lignes s'étendant selon ledit axe, ladite étape de calcul de transformée de chacune des lignes comprenant :

◦ pour chaque point (k) d'une ligne de ladite partie chargée, le calcul d'un coefficient (sk, dk) par transformée en ondelettes séparables à partir des données stockées en mémoire tampon.

4. Procédé selon la revendication précédente, dans lequel ladite transformée en ondelettes monodimensionnelle est une transformée par banc de filtres :

$$s_k = h_0 x_{2k} + \sum_{i=1}^{} h_i (x_{2k-i} + x_{2k+i})$$

$$d_k = g_0 x_{2k+1} + \sum_{i=1}^{} g_i (x_{2k+1-i} + x_{2k+1+i})$$

où sk et dk sont les coefficients de la transformée calculés respectivement aux points 2k et 2k+1 le long de la ligne parcourue (Li), et
{hi} et {gj} sont respectivement les coefficients des filtres symétriques passe-bas et passe-haut.

5. Procédé selon la revendication 3, dans lequel ladite transformée en ondelettes monodimensionnelle est une transformée par schéma lifting à 2N pas :

$$d_k^0 = x_{2k+1}$$

$$s_k^0 = x_{2k}$$

$$d_k^n = d_k^{n-1} - \sum_{i}^{L_{2n+1}/2} \alpha_i^{2n+1}(s_{k+1-i}^{n-1} + s_{k+i}^{n-1}) \quad \forall\, n \geq 1$$

$$s_k^n = s_k^{n-1} + \sum_{i}^{L_{2n}/2} \alpha_i^{2n}(d_{k-i}^{n} + d_{k-1+i}^{n}) \quad \forall\, n \geq 1$$

où $s^N$ et $d^N$ sont les coefficients de la transformée calculés respectivement aux points 2k et 2k+1 le long de la ligne parcourue (Li), et

$\{\alpha_i^n\}$ sont les coefficients des opérateurs de prédiction et de mise à jour du schéma lifting.

**6.** Procédé selon la revendication 1, dans lequel lesdits filtres sont des filtres multidimensionnels non séparables.

**7.** Procédé selon l'une quelconque des revendications précédentes, dans lequel l'étape de calcul de la transformée en ondelettes multidimensionnelle comprend le calcul en un point (k) d'un desdits coefficients (sk, dk) de transformée en ondelettes et la substitution, en mémoire tampon, de la donnée (xk) associée au point (k) par ledit coefficient (sk, dk) calculé.

**8.** Procédé selon la revendication précédente, dans lequel, avant ladite étape de substitution, ledit coefficient calculé (sk, dk) est stocké temporairement dans une mémoire temporaire (Temp).

**9.** Procédé selon la revendication précédente, dans lequel la transformation en ondelettes met en oeuvre des filtres séparables monodimensionnels de largeur maximale (M) et ladite mémoire temporaire (Temp) est un registre à décalage de taille au moins égale à ⌊M/2⌋, où ⌊ ⌋ est la fonction partie entière inférieure.

**10.** Procédé selon la revendication 8, dans lequel la transformation en ondelettes met en oeuvre des filtres séparables monodimensionnels de largeur maximale (M),
la taille de ladite mémoire temporaire (Temp) est au moins égale à la valeur maximale des dimensions de ladite partie chargée en mémoire tampon et
ladite substitution comprend la copie de ladite mémoire temporaire dans ladite mémoire tampon lorsque tous les coefficients (sk, dk) de ladite ligne (Li) calculés et stockés dans la mémoire temporaire (Temp).

**11.** Procédé selon l'une des revendications 7 à 10, comprenant, une fois que lesdits coefficients (sk, dk) ont été calculés pour la totalité de la partie chargée et ont été substitués dans la mémoire tampon, une étape d'ordonnancement desdits coefficients (sk, dk) pour séparer les coefficients basse fréquence (sk) et haute fréquence (dk).

**12.** Procédé selon l'une quelconque des revendications précédentes, comprenant, pour chaque position de ladite fenêtre, une pluralité d'itérations de ladite étape de conversion, ladite étape de calcul de transformée en ondelettes d'une itération étant effectuée sur les coefficients (sk, dk) générés lors de l'itération antérieure.

**13.** Procédé selon l'une quelconque des revendications précédentes, dans lequel ledit parcours comprend le déplacement de ladite fenêtre, selon successivement chacun des axes de l'image, d'un pas égale à la dimension de ladite fenêtre selon l'axe de déplacement.

**14.** Procédé selon l'une quelconque des revendications précédentes, dans lequel ledit dimensionnement de la fenêtre est également fonction de la longueur des filtres utilisés pour la transformation en ondelettes.

**15.** Procédé selon l'une quelconque des revendications précédentes, dans lequel, lors dudit chargement, on charge également des données brutes (xk) associées à des points externes à la fenêtre et voisins des bordures de ladite fenêtre, de sorte à effectuer ladite transformée en ondelettes des points au voisinage desdites bordures en tenant compte desdites données des points voisins externes.

**16.** Procédé selon l'une quelconque des revendications précédentes, dans lequel on parallélise lesdites étapes de chargement et de conversion pour au moins deux fenêtres distinctes le long dudit parcours de l'image.

**17.** Système pour la conversion de données brutes numériques (xk) multidimensionnelles correspondant à des points (k) composant une image 2D ou 3D, le système comprenant :

- des moyens de définition d'une fenêtre multidimensionnelle pour le parcours de ladite image;
- des moyens agencés pour parcourir ladite image par déplacement de ladite fenêtre dans l'image selon les axes de l'image ;
- des moyens d'acquisition et de chargement agencés pour acquérir et charger, à chaque position de ladite fenêtre dans l'image, dans ladite mémoire tampon, des données brutes (xk) de la partie de ladite image définie par la fenêtre ;
- des moyens de conversion agencés pour calculer la transformée en ondelettes multidimensionnelle de ladite partie chargée à l'aide d'au moins un filtre à support compact pour générer des coefficients basse fréquence (sk) et haute fréquence (dk), la longueur du filtre passe haut étant $L_h$ et la longueur du filtre passe bas étant $L_g$;
- des moyens de sauvegarde aptes à sauvegarder en mémoire lesdits coefficients générés,

**caractérisé en ce que** les moyens de définition de la fenêtre multidimensionnelle sont des moyens de dimensionnement fonction de la taille B d'une mémoire tampon selon l'équation

$$B = \prod_{i=1}^{n}(x_i + L).$$ où L est le maximum des longueurs Lh et Lg moins un, n est un entier égal à 2 pour une image 2D et égal à 3 pour une image 3D et xi le nombre de points de la fenêtre multidimensionnelle sur l'axe i.

18. Procédé de synthèse d'un plan dans une image 3D convertie par transformée en ondelettes selon l'une quelconque des revendications 1 à 16, comprenant une étape de détermination de l'ensemble desdites parties de l'image intersectées par ledit plan, une étape de transformée inverse en ondelettes des coefficients desdites parties déterminées et une étape de synthèse dudit plan à partir des données calculées lors de l'étape de transformée inverse.

## Patentansprüche

1. Verfahren zum Konvertieren von mehrdimensionalen digitalen Rohdaten (xk), die Punkten (k) entsprechen, die ein 2D- oder 3D-Bild aufbauen, wobei das Verfahren umfasst:

- einen Schritt des Definierens eines mehrdimensionalen Fensters für das Durchlaufen des Bildes;
- einen Schritt des Durchlaufens des Bildes, der das Bewegen des Fensters im Bild gemäß den Bildachsen umfasst;
- an jeder Position des Fensters im Bild:

-- einen Schritt des Aufzeichnens der Rohdaten (xk) des Teils des Bildes, der durch das Fenster definiert wird, und Ladens in den Pufferspeicher;
-- einen Schritt des Konvertierens, der einen Schritt des Berechnens der mehrdimensionalen Wavelet-Transformation des Teils, der geladen wurde, mit Hilfe von mindestens einem Compact Support-Filter umfasst, um niederfrequente (sk) und hochfrequente Koeffizienten (dk) zu erzeugen, wobei die Länge des Hochpassfilters $L_h$ ist und die Länge des Tiefpassfilters $L_g$ ist;
-- einen Schritt des Speicherns der erzeugten Koeffizienten,

**dadurch gekennzeichnet, dass** der Schritt des Definierens des mehrdimensionalen Fensters ein Schritt des Dimensionierens ist, der von der Größe B eines Pufferspeichers abhängig ist, gemäß der Gleichung

$$B = \prod_{i=1}^{n}(x_i + L)$$ , worin L das Maximum der Längen Lh und Lg minus eins ist, n eine ganze Zahl von gleich 2 bei einem 2D-Bild und gleich 3 bei einem 3D-Bild ist, und xi die Anzahl von Punkten des mehrdimensionalen Fensters auf der Achse i ist.

2. Verfahren gemäß dem vorstehenden Anspruch, wobei die Filter eindimensionale separable Filter sind.

3. Verfahren gemäß dem vorstehenden Anspruch, wobei der Schritt des Berechnens umfasst:

- nacheinander, gemäß jeder der Achsen des Teils, der geladen wurde, einen Schritt des Berechnens der eindimensionalen separablen Wavelet-Transformation von jeder der Geraden, die sich gemäß der Achse erstrecken, wobei der Schritt des Berechnens der Transformation von jeder der Geraden umfasst:

-- für jeden Punkt (k) einer Geraden des Teils, der geladen wurde, das Berechnen eines Koeffizienten (sk, dk) durch separable Wavelet-Transformation ausgehend von den Daten, die im Pufferspeicher gespeichert sind.

4. Verfahren gemäß dem vorstehenden Anspruch, wobei die eindimensionale Wavelet-Transformation eine Transformation durch Filterbank ist:

$$s_k = h_0 x_{2k} + \sum_{i=1}^{n} h_i (x_{2k-i} + x_{2k+i})$$

$$d_k = g_0 x_{2k+1} + \sum_{i=1}^{n} g_i (x_{2k+1-i} + x_{2k+1+i})$$

worin sk und dk die Koeffizienten der Transformation sind, die jeweils an den Punkten 2k und 2k+1 entlang der durchlaufenen Geraden (Li) berechnet wurden, und
{hi} und {gj} jeweils die Koeffizienten der symmetrischen Tiefpass- und Hochpassfilter sind.

5. Verfahren gemäß Anspruch 3, wobei die eindimensionale Wavelet-Transformation eine Transformation durch Lifting-Schema mit einem Abstand von 2N ist:

$$d_k^0 = x_{2k+1}$$

$$s_k^0 = x_{2k}$$

$$d_k^{n-1} - \sum_{i=1}^{L_{2n+1}/2} \alpha_i^{2n+1} (s_{k+1-i}^{n-1} + s_{k+i}^{n-1}) \ \ \forall n \geq 1$$

$$S_k^{n-1} + \sum_{i=1}^{L_{2n}/2} \alpha_i^{2n} (d_{k-i}^{n} + d_{k-1+i}^{n}) \ \ \forall n \geq 1$$

worin $s_i^N$ und $d_i^N$ die Koeffizienten der Transformation sind, die jeweils an den Punkten 2k und 2k+1 entlang der durchlaufenen Geraden (Li) berechnet wurden, und

{ $\alpha_i^n$ } die Koeffizienten der Vorhersage- und Aktualisierungsoperatoren des Lifting-Schemas sind.

6. Verfahren gemäß Anspruch 1, wobei die Filter mehrdimensionale nicht separable Filter sind.

7. Verfahren gemäß einem der vorstehenden Ansprüche, wobei der Schritt des Berechnens der mehrdimensionalen Wavelet-Transformation das Berechnen, in einem Punkt (k), von einem der Koeffizienten (sk, dk) der Wavelet-Transformation und das Substituieren, im Pufferspeicher, der Dateneinheit (xk), die dem Punkt (k) zugeordnet ist, durch den berechneten Koeffizienten (sk, dk) umfasst.

8. Verfahren gemäß dem vorstehenden Anspruch, wobei vor dem Schritt des Substituierens der berechnete Koeffizient (sk, dk) temporär in einem temporären Speicher (Temp) gespeichert wird.

9. Verfahren gemäß dem vorstehenden Anspruch, wobei die Wavelet-Transformation eindimensionale separable Filter von maximaler Breite (M) einsetzt und der temporäre Speicher (Temp) ein Schieberegister einer Größe von mindestens gleich ⌊M/2⌋ ist, wobei ⌊ ⌋ die Funktion des unteren ganzzahligen Teils ist.

10. Verfahren gemäß Anspruch 8, wobei die Wavelet-Transformation eindimensionale separable Filter von maximaler Breite (M) einsetzt,
wobei die Größe des temporären Speichers (Temp) mindestens gleich dem maximalen Wert der Dimensionen des Teils ist, der in den Pufferspeicher geladen wurde, und
das Substituieren das Kopieren des temporären Speichers in den Pufferspeicher umfasst, wenn alle Koeffizienten (sk, dk) der Geraden (Li) berechnet und im temporären Speicher (Temp) gespeichert wurden.

11. Verfahren gemäß einem der Ansprüche 7 bis 10, umfassend, sobald die Koeffizienten (sk, dk) für die Gesamtheit des Teils, der geladen wurde, berechnet wurden und im Pufferspeicher substituiert wurden, einen Schritt des Ordnens der Koeffizienten (sk, dk), um die niederfrequenten (sk) und hochfrequenten Koeffizienten (dk) zu separieren.

12. Verfahren gemäß einem der vorstehenden Ansprüche, umfassend, für jede Position des Fensters, eine Vielzahl von Iterationen des Konvertierungsschrittes, wobei der Schritt des Berechnens der Wavelet-Transformation einer Iteration an den Koeffizienten (sk, dk) vorgenommen wird, die anlässlich der vorhergehenden Iteration erzeugt wurden.

13. Verfahren gemäß einem der vorstehenden Ansprüche, wobei das Durchlaufen das Bewegen des Fensters gemäß nacheinander jeder der Bildachsen in einem Abstand umfasst, der gleich der Dimension des Fensters gemäß der Bewegungsachse ist.

14. Verfahren gemäß einem der vorstehenden Ansprüche, wobei das Dimensionieren des Fensters ebenfalls von der Länge der für die Wavelet-Transformation verwendeten Filter abhängig ist.

15. Verfahren gemäß einem der vorstehenden Ansprüche, wobei anlässlich des Ladens ebenfalls Rohdaten (xk) geladen werden, die Punkten zugeordnet sind, die extern des Fensters und zu den Rändern des Fensters benachbart liegen, sodass die Wavelet-Transformation der Punkte in der Nachbarschaft der Ränder unter Berücksichtigung der Daten der benachbarten externen Punkte vorgenommen wird.

16. Verfahren gemäß einem der vorstehenden Ansprüche, wobei die Schritte des Ladens und des Konvertierens für mindestens zwei verschiedene Fenster entlang des Durchlaufs des Bildes parallelisiert werden.

17. System für das Konvertieren von mehrdimensionalen digitalen Rohdaten (xk), die Punkten (k) entsprechen, die ein 2D- oder 3D-Bild aufbauen, wobei das System umfasst:

   - Mittel zum Definieren eines mehrdimensionalen Fensters für das Durchlaufen des Bildes;
   - Mittel, die dafür eingerichtet sind, das Bild durch Bewegen des Fensters im Bild gemäß den Bildachsen zu durchlaufen;
   - Aufzeichnungs- und Lademittel, die dafür eingerichtet sind, an jeder Position des Fensters im Bild Rohdaten (xk) des Teils des Bildes, der durch das Fenster definiert ist, aufzuzeichnen und in den Pufferspeicher zu laden;
   - Konvertierungsmittel, die dafür eingerichtet sind, die mehrdimensionale Wavelet-Transformation des Teils, der geladen wurde, mit Hilfe von mindestens einem Compact Support-Filter zu berechnen, um niederfrequente (sk) und hochfrequente Koeffizienten (dk) zu erzeugen, wobei die Länge des Hochpassfilters $L_h$ ist und die Länge des Tiefpassfilters $L_g$ ist;
   - Speichermittel, die dazu in der Lage sind, die erzeugten Koeffizienten im Speicher zu speichern, **dadurch gekennzeichnet, dass** die Mittel zum Definieren des mehrdimensionalen Fensters Dimensioniermittel sind, die von der Größe B eines Pufferspeichers abhängig sind, gemäß der Gleichung $B = \prod_{i=1}^{n}(x_i + L)$, worin L das Maximum der Längen Lh und Lg minus eins ist, n eine ganze Zahl von gleich 2 bei einem 2D-Bild und gleich 3 bei einem 3D-Bild ist, und xi die Anzahl von Punkten des mehrdimensionalen Fensters auf der Achse i ist.

18. Verfahren zur Synthese einer Ebene in einem 3D-Bild, das durch Wavelet-Transformation gemäß einem der Ansprüche 1 bis 16 konvertiert wurde, umfassend einen Schritt des Bestimmens der Gesamtheit der Teile des Bildes, die von der Ebene geschnitten werden, einen Schritt der inversen Wavelet-Transformation der Koeffizienten der Teile, die bestimmt wurden, und einen Schritt der Synthese der Ebene ausgehend von den Daten, die anlässlich des Schritts der inversen Transformation berechnet wurden.

**Claims**

1. A method of converting raw multidimensional digital data (xk) corresponding to points (k) making up a 2D or 3D image, the method comprising:

- a step of sizing a multidimensional window for traversing of the said image;
- a step of traversing the said image comprising the movement of the said window in the image along the axes of the image;
- at each position of the said window in the image:

○ a step of acquiring and loading, in the said buffer, raw data (xk) of the part of the said image defined by the window;
○ a conversion step comprising a step of calculating the multidimensional wavelet transform of the said loaded part by means of at least one compact support filter for generating low-frequency (sk) and high-frequency (dk) coefficients, the high-frequency filter length being $L_h$ and the low-frequency filter length being $L_g$;
○ a step of saving the said coefficients generated,

caracterized in that the step of sizing the multidimensional window is a step of sizing function of the size B of a buffer memory according to equation

$$B = \prod_{i=1}^{n}(x_i + L)$$ where L is the maximum of lengths $L_h$ and $L_g$ minus one, n is an integer equal to 2 for a 2D image and equal to 3 for a 3D image et $x_i$ the number of points of the multidimensional window along axis i.

2. A method according to the preceding claim, in which the said filters are separable monodimensional filters.

3. A method according to the preceding claim, in which the said calculation step comprises:

- successively along each of the axes of said loaded part, a step of calculating the monodimensional transform in separable wavelets of each of the lines extending along the said axis, the said transform calculation step for each of the lines comprising:

○ for each point (k) on a line of the said loaded part, the calculation of a coefficient (sk, dk) by separable wavelet transform from data stored in buffer.

4. A method according to the preceding claim, in which the said monodimensional wavelet transformation is a transformation by filter bank:

$$s_k = h_0 x_{2k} + \sum_{i=1}^{n} h_i(x_{2k-i} + x_{2k+i})$$

$$s_k = h_0 x_{2k} + \sum_{i=1}^{n} h_i(x_{2k-i} + x_{2k+i})$$

where sk and dk are the coefficients of the transform calculated respectively at points 2k and 2k+1 along the line travelled (Li), and
{hi} and {gj} are respectively the coefficients of the low-pass and high-pass symmetrical filters.

5. A method according to claim 3, in which the said monodimensional wavelet transformation is a transformation by 2N step lifting scheme:

$$d_k^0 = x_{2k+1}$$

$$s_k^0 = x_{2k}$$

$$d_k^{n-1} - \sum_{i=1}^{L_{2n+1}/2} \alpha_i^{2n+1}(s_{k+1-i}^{n-1} + s_{k+i}^{n-1}) \ \forall\, n \geq 1$$

$$S_k^{n-1} + \sum_{i=1}^{L_{2n}/2} \alpha_i^{2n}(d_{k-i}^{n} + d_{k-1+i}^{n}) \ \forall\, n \geq 1$$

where $s_i^N$ and $d_i^N$ are the coefficients of the transform calculated respectively at points 2k and 2k+1 along the line travelled (Li), and

$\alpha_i^n$ are the coefficients of the prediction and updating operators of the lifting scheme.

6. A method according to claim 1, in which the said filters are non-separable multidimensional filters.

7. A method according to any one of the preceding claims, in which the step of calculating the multidimensional wavelet transform comprises the calculation at a point (k) of one of the said wavelet transform coefficients (sk, dk) and the replacement, in buffer memory, of the data (xk) associated with the point (k) by said calculated coefficient (sk, dk).

8. A method according to the preceding claim, in which, before the said substitution step, the said calculation coefficient (sk, dk) is stored temporarily in a temporary memory (Temp).

9. A method according to the preceding claim, in which the wavelet transformation uses monodimensional separable filters of maximum width (M) and the said temporary memory (Temp) is a shift register with a size at least equal to $\lfloor M/2 \rfloor$, where $\lfloor \ \rfloor$ is the lower integer part function.

10. A method according to claim 8, in which the wavelet transformation uses monodimensional separable filters of maximum width (M), the size of the said temporary memory (Temp) is at least equal to the maximum value of the dimensions of the said part loaded in buffer, and the said replacement comprises the copying of the said temporary memory in the said buffer when all the coefficients (sk, dk) of the said line (Li) have been calculated and stored in the temporary memory (Temp).

11. A method according to one of claims 7 to 10, comprising, once the said coefficients (sk, dk) have been calculated for the entire part loaded and have been replaced in the buffer, a step of sequencing the said coefficients (sk, dk) in order to separate the low-frequency (sk) and high-frequency (dk) coefficients.

12. A method according to any one of the preceding claims, comprising, for each position of the said window, a plurality of iterations of the said conversion step, the said wavelet transform calculation step of an iteration being performed on the coefficients (sk, dk) generated during the previous iteration.

13. A method according to any one of the preceding claims, in which the said transit comprises the movement of the said window, along successively each of the axes of the image, by a step equal to the dimension of the said window along the movement axis.

14. A method according to any one of the preceding claims, in which the said sizing of the window is also a function of the length of the filters used for the wavelet transformation.

15. A method according to any one of the preceding claims, in which, during the said loading, raw data (xk) associated with points external to the window and adjacent to the borders of the said window are also loaded, so as to effect the said wavelet transformation of the points in the vicinity of the said borders taking account of the said data of the external adjacent points.

16. A method according to any one of the preceding claims, in which the said loading and conversion steps are put in parallel for at least two distinct windows along the said traverse of the image.

**17.** A system for converting raw multidimensional digital data (xk) corresponding to points (k) making up a 2D or 3D image, the system comprising:

- means of sizing a multidimensional window for traversing the said image;
- means arranged to traverse the said image by movement of the said window in the image along the axes of the image;
- acquisition and loading means arranged to acquire and load, at each position of the said window in the image, in the said buffer, raw data (xk) of the part of the said image defined by the window;
- conversion means arranged to calculate the multidimensional wavelet transform of the said part loaded by means of at least one compact support filter for generating low-frequency (sk) and high-frequency (d k) coefficients, the high-frequency filter length being $L_h$ and the low-frequency filter length being $L_g$;
- saving means able to save the said generated coefficients in memory,

caracterized in that the means for sizing the multidimensional window are means of sizing function of the size B of a buffer memory according to equation $B = \prod_{i=1}^{n}(x_i + L)$ where L is the maximum of lengths $L_h$ and $L_g$ minus one, n is an integer equal to 2 for a 2D image and equal to 3 for a 3D image et $x_i$ the number of points of the multidimensional window along axis i.

**18.** A method of synthesising a plane in a 3D image converted by wavelet transformation according to any one of claims 1 to 16, comprising a step of determining all the said parts of the image intersected by the said plane, a step of reverse wavelet transformation of the coefficients of the said parts determined and a step of synthesising the said plane from the data calculated during the reverse transformation.

(1a)

(1b)

Fig. 1

(2a) Objet de départ C

(2b) C1 + D1

Fig. 2

(4a) Analyse

(4b) Synthèse

Fig. 4

(3a) Objet de départ C₀

(3b) Objet C₂ après 2 niveaux de simplification

(3c) Objet C₃ après 3 niveaux de simplification (3d) Objet C₄ après 4 niveaux de simplification

Fig. 3

Fig. 5

$$\boxed{f_n \quad \cdots \quad f_2 \ f_1 \ f_0 \ f_1 \ f_2 \ f_3 \quad \cdots \quad f_n}$$

$$\longleftrightarrow$$
$$L_{fi} = 2\,n+1$$

## (6a) filtre passe bas

$$\boxed{g_m \quad \cdots \quad g_1 \ g_0 \ g_1 \ g_2 \ \cdots \ g_m}$$

$$\longleftrightarrow$$
$$L_g = 2\,m+1$$

## (6b) filtre passe haut

## Fig. 6

$x_e = s^{(0)}$

$x$ — Transformée polyphase — $-P$ — $U$ — $s$

$x_0 = d^{(0)}$ — $d$

## Fig. 7

$$\boxed{\alpha^n_{m/2} \ \cdots \ \alpha^n_2 \ \alpha^n_1 \ \alpha^n_1 \ \alpha^n_2 \ \cdots \ \alpha^n_{m/2}}$$

$$\longleftrightarrow$$
$$L = m$$

## Fig. 8

Fig. 9

(10a) gestion des bords par ajout de 0

(10b) gestion des bords par réplication

(10c) gestion des bords par symétrie

Fig. 10

Fig. 11

Point courant

**Buffer à Itération k**

$\ldots$ | $S_{(k-\lceil\frac{M}{2}\rceil-1)}$ | $d_{(k-\lceil\frac{M}{2}\rceil-1)}$ | $X_{(2k-\lceil\frac{M}{2}\rceil)}$ | $\ldots$ | $X_{2k-1}$ | $X_{2k}$ | $X_{2k+1}$ | $\ldots$ | $X_{(2k+\lceil\frac{M}{2}\rceil)}$ | $X_{(2k+\lceil\frac{M}{2}\rceil+1)}$ | $\ldots$

20

Points calculés et stockés dans un registre à décalage (zone mémoire supplémentaire)

26

$S_{(k-\lceil\frac{M}{2}\rceil)}$ | $\ldots$ | $d_{k-1}$ ← Calcul de $s_k$

Point courant

**Buffer à Itération k+1**

$\ldots$ | $d_{(k-\lceil\frac{M}{2}\rceil-1)}$ | $S_{(k-\lceil\frac{M}{2}\rceil)}$ | $X_{(2k-\lceil\frac{M}{2}\rceil+1)}$ | $\ldots$ | $X_{2k}$ | $X_{2k+1}$ | $X_{2k+2}$ | $\ldots$ | $X_{(2k+\lceil\frac{M}{2}\rceil+1)}$ | $X_{(2k+\lceil\frac{M}{2}\rceil+2)}$ | $\ldots$

20

Points calculés et stockés dans un registre à décalage (zone mémoire supplémentaire)

$d_{(k-\lceil\frac{M}{2}\rceil)}$ | $\ldots$ | $S_k$ ← Calcul de $d_k$

26

$X_k$ : **données sources**

$S_k$ et $d_k$: **coefficients calculés par filtrage**

## Fig. 12

R                                               S en Mo

## Fig. 13

10 — Chargement de la zone à traiter dans le buffer

12 — Gestion des bords

Filtrer une ligne (x)

Mettre à jour le buffer

Toutes les lignes traitées — Non

Oui

Filtrer une colonne (y)

Mettre à jour le buffer

14

Toutes les colonnes traités — Non

Oui

Filtrer une ligne en z

Mettre à jour le buffer

Touts les axes z traités — Non

Oui

16 — Sauvegarder la HF et la BF

Oui — Fin

Tout l'objet 3D traité — Non — 18

19

Fig. 14

(15a) Z : Zone à filtrer suivant l'axe x

(15b) Z' : Zone à filtrer suivant l'axe y

(15c) Z" : Zone à filtrer suivant l'axe z

Fig. 15

Fig. 16

Fig. 17

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- *Geoscience,* 2004, vol. 336, 579-585
- *Journal of VLSI Signal Processing,* 2005, vol. 41, 209-223